# EUROPEAN PATENT APPLICATION

(11) **EP 4 843 455 A1**
(43) Date of publication of application: **25.11.2026**
(21) Application number: 26178287.4
(22) Date of filing: 12.05.2026
(51) Int. Cl.: A47J 31/32, A47J 31/42

(54) **A COFFEE PREPARATION METHOD BASED ON A VACUUM COFFEE MACHINE**

(30) Priority: 20.05.2025 CN 202510650366; 15.01.2026 CN 202610053059
(71) Applicant: Moyal, Yehuda Arik, Wenzhou, Zhejiang 325000 (CN)
(72) Inventor: Moyal, Yehuda Arik, Wenzhou, Zhejiang 325000 (CN)
(74) Representative: Wang, Bo

(57) **Abstract**

The present invention relates to a coffee making method based on a vacuum coffee machine, which uses a vacuum coffee machine. The coffee making method based on a vacuum coffee machine comprises the following steps: injecting coffee beans into a container assembly; specifically, coffee beans of a set quantity are injected into the container assembly through the rationing assembly described later. The present invention enables coffee beans to be ground, heated, and extracted by a grinding body under vacuum conditions, and avoids or reduces the chance of coffee powder to transfer between different units and come into contact with oxygen in the air, thereby minimizing oxidation and maximizing the preservation of volatile oils, antioxidants, and enzymes in coffee powder; it can also reduce the overall vibration and operating noise of the coffee machine.

## Description

### Technical field

The present invention relates to the field of coffee machine technology, particularly to vacuum coffee machines, coffee bean rationing structures, vacuum mixing structures, and sealing structures of vacuum coffee machines, coffee preparation methods based on vacuum coffee machines, and improved coffee bean rationed input structures.

### Background art

First technical problem: A conventional vacuum coffee machine crushes coffee beans through the high-speed rotating blade inside the container before brewing. However, it is difficult to ensure the airtightness of the high-speed rotating blade shaft, and the high-speed rotating blade, etc. would experience significant vibrations and noise.

The rationing structure for coffee beans of a conventional coffee machine comprises a rationing container member, a rationing assembly base, and a rotating disc with rotational power, and the rotating disc is provided with a plurality of rotating disc grooves that run through it. The rotating disc outputs the coffee beans inside the rotating disc groove to achieve the rationed input of coffee beans to the coffee machine. However, the coffee beans in the rotating disc groove have different postures and gaps, resulting in the lower accuracy rationed input of coffee beans into the coffee machine.

Second technical problem: Conventional coffee machines require the transfer of coffee beans or coffee powder between different units during the grinding, heating, and extraction processes, which increases the chance of oxidation when coffee beans or coffee powder come(s) into contact with air, and results in the loss of volatile oils, antioxidants, and enzymes in the coffee powder, causing flavor changes such as souring in the produced coffee. This problem is particularly evident especially in the case of a large contact area between coffee powder and air.

In order to reduce the chance of coffee beans coming into contact with air, the container structure used to hold and output coffee beans will be sealed, which makes it harder to quantitatively output coffee beans. The container used for coffee bean processing also needs to be sealed, and it is necessary to add coffee beans to this container, it is therefore essential to automatically open and close this container, and ensure its airtightness.

### Summary of the present invention

The first objective of the present invention is to solve or alleviate the above first technical problem.

The second objective of the present invention is to solve or alleviate the above second technical problem.

The means adopted by the present invention to solve the first technical problem is a coffee making method based on a vacuum coffee machine, wherein the vacuum coffee machine comprises a container assembly, an electric control device, and a processing assembly set inside the container assembly; the container assembly is provided with a heating device, an atmospheric solenoid valve, a release valve, a temperature sensor, and an air pressure sensor, and is connected to a vacuum pump and a water pump; the processing assembly comprises a grinding assembly and a grinding power device; the grinding assembly comprises a grinding outer ring and a grinding body located within the grinding outer ring, which is connected to the output end of the grinding power device; the coffee making method based on a vacuum coffee machine, which uses a vacuum coffee machine, and comprises the following steps: injecting coffee beans into the container assembly; specifically, injecting coffee beans of the set quantity into the container assembly through the rationing assembly described later; pre-soaking coffee beans; specifically, injecting pre-soaking water into the container assembly, and then, while the container assembly is sealed, starting the heating device to heat the water inside the container assembly to the pre-soaking water temperature during the pre-soaking water heating time, and maintaining it for the pre-soaking time to form pre-soaked coffee beans; vacuuming the container assembly; specifically, starting the vacuum pump to vacuum the container assembly to the vacuum pressure; wet-grinding pre-soaked coffee beans; specifically, starting the grinding power device while the container assembly is sealed to rotate the grinding body at the grinding speed for a grinding time; brewing coffee; specifically, communicating the container assembly with the atmosphere and injecting water into the container assembly until the total water volume is reached; starting the heating device to heat the water inside the container assembly to the extraction water temperature, and maintaining it for the extraction time to form a coffee liquid; outputting coffee; specifically, starting the release valve to output the coffee liquid from the release valve.

The effect achieved by the present invention is to enable coffee beans to be ground, heated, and extracted by the grinding body under vacuum conditions, and avoid or reduce the chance of coffee powder to transfer between different units and come into contact with oxygen in the air, thereby minimizing oxidation and maximizing the preservation of volatile oils, antioxidants, and enzymes in coffee powder; it can also reduce the overall vibration and operating noise of the coffee machine.

A further technical solution, wherein the grinding time is the set quantity of coffee beans divided by 31 and multiplied by 30.

A further technical solution, wherein the processing assembly comprises a limit cover located above the grinding body, and in the step of wet-grinding pre-soaked coffee beans, when the grinding time is ≥60s, the grinding body runs in a pulse mode for the grinding time, and the pulse mode is the pulse stop time after the grinding body rotates for a pulse opening time within one pulse cycle.

This technical solution can ensure that all coffee beans are fully ground by the grinding body in cases where a large quantity of coffee beans is set.

A further technical solution, wherein the grinding speed is 60rpm.

This technical solution can ensure that all coffee beans are fully ground by the grinding body.

A further technical solution, wherein the upper limit of the grinding time is 130s.

This technical solution can improve the operating reliability of the vacuum coffee machine.

A further technical solution, wherein the pre-soaking water temperature is 35-55°C.

This technical solution can ensure that all coffee beans are fully ground by the grinding body.

A further technical solution, wherein the vacuum pressure is -25~-50kPa.

This technical solution can ensure minimal oxidation of coffee beans, etc. while ensuring the reliable operation of the vacuum coffee machine.

A further technical solution, wherein the vacuum pressure is -36kPa and the extraction water temperature is 94°C.

This technical solution can reduce cholesterol-raising components and is relatively friendly to the heart.

A further technical solution, wherein the extraction water temperature is ≤99°C and ≥94°C.

This technical solution can ensure extraction quality while preventing the excessive concentration of the coffee liquid arising from the boiling of the water in the container assembly.

A further technical solution, wherein in the step of injecting coffee beans into the container assembly, the quantity of coffee beans is set according to the concentration, which is the difference between the concentration level minus 1 multiplied by 0.2, added by 1, and multiplied by the base value of coffee beans.

The means adopted by the present invention to solve the second technical problem is as follows:
according to the coffee preparation method based on a vacuum coffee machine, the vacuum coffee machine comprises a container assembly, a sealing structure, a processing structure, and a carrier assembly having a water source interface; the carrier assembly is provided with an electronic control device, a water pump, and a vacuum pump; the processing structure comprises an integrated container, a blade assembly, and a rotating power device; the integrated container is fixed inside the carrier assembly and is provided with a heating device, a temperature sensor, a rotating shaft hole, a water inlet, a suction hole, and a bottom outlet with an outlet valve; the water pump, vacuum pump, heating device, temperature sensor, rotating power device, and outlet valve are electrically connected to the electronic control device respectively; the sealing structure comprises a sealing and fixing cover and a movable cover, the sealing and fixing cover is provided with a bean inlet and completely covers a top opening of the integrated container, and the movable cover is provided with a movable cover hole and a sealing portion and is movably connected to the sealing and fixing cover, so that the movable cover hole and sealing portion face the bean inlet respectively; the blade assembly comprises a blade drive shaft and a blade fixed on the blade drive shaft, the blade is disposed inside the integrated container, and the bottom end of the blade drive shaft extends from the rotating shaft hole and is connected to the rotating power end of the rotating power device; the water source interface is connected to the water inlet through a water pump, and the path from the water source interface to the water inlet is a one-way path at the water source interface facing toward the water inlet; the vacuum pump is connected to the suction hole;

It comprises the following steps:
adding coffee beans: moving the movable cover in relative to the sealing and fixing cover so that the movable cover hole faces the bean inlet, and then adding coffee beans to the integrated container; moving the movable cover in relative to the sealing and fixing cover so that the sealing portion is facing the bean inlet and the outlet valve is closed;
vacuum grinding: starting the vacuum pump to create and maintain a vacuum inside the integrated container, and activating the rotating power device to grind coffee beans into coffee powder using the blade at a grinding speed; coffee brewing.
coffee brewing: stopping the vacuum pump to restore the air pressure inside the integrated container to atmospheric pressure, adding room temperature water to the integrated container, and starting the heating device to raise the temperature inside the integrated container to the brewing temperature and maintain during the brewing time;
coffee outputting: opening the outlet valve, and outputting the mixture of coffee powder and water in the integrated container from the outlet valve.

The present invention achieves the following effect: the coffee beans are ground, heated, and extracted in a unique sealed space, avoiding or reducing the chances for coffee powder to come into contact with oxygen in the air during its transfer between different units, thereby minimizing the oxidation and maximizing the preservation of volatile oils, antioxidants, and enzymes in the coffee powder.

In a further technical solution, further comprising a step of soaking coffee beans between the step of injecting coffee beans and the step of vacuum grinding, specifically: the water pump is started to inject room temperature water into the integrated container and the coffee beans are soaked for a certain period of time in the water heated to the soaking temperature.

It can ensure the sufficient extraction of the coffee bean flavor.

In a further technical solution, the soaking temperature is from room temperature to 45°C, and the soaking time is 2-10min.

In a further technical solution, further comprising a step of stirring between the step of soaking coffee beans and the step of vacuum grinding, specifically: the rotating power device is started to operate at the stirring speed for a stirring time.

It can ensure the uniform grinding of coffee beans and prevent clumping.

In a further technical solution, the stirring speed is 50-120rpm and the stirring time is 20-30s.

In a further technical solution, further comprising a step of final mixing between the step of brewing coffee and the step of outputting coffee, specifically: the rotating power device is started to run at the mixing speed for a mixing time.

It can ensure that the coffee powder is thoroughly mixed with water, that the coffee flavor is fully blended, and that the coffee liquid has a smooth taste.

In a further technical solution, the mixing speed is 800rpm and the mixing time is 3-10s.

### Brief description of the drawings

Fig. 1 is a three-dimensional schematic diagram of a vacuum coffee machine according to embodiment 1 of the present invention.
Fig. 2 is a three-dimensional half-sectional schematic diagram of the vacuum coffee machine according to embodiment 1 of the present invention.
Fig. 3 is a three-dimensional schematic diagram of the container assembly 1, processing assembly 2, lifting structure 3, water pump 4 and vacuum pump 5 according to embodiment 1 of the present invention.
Fig. 4 is three-dimensional exploded view 1 of the container assembly 1, processing assembly 2, lifting structure 3, water pump 4 and vacuum pump 5 according to embodiment 1 of the present invention.
Fig. 5 is three-dimensional exploded view 2 of the container assembly 1, processing assembly 2, lifting structure 3, water pump 4 and vacuum pump 5 according to embodiment 1 of the present invention.
Fig. 6 is a three-dimensional schematic diagram of the container lid 12 according to embodiment 1 of the present invention.
Fig. 7 is a three-dimensional schematic diagram of the processing assembly 2 according to embodiment 1 of the present invention.
Fig. 8 is a three-dimensional schematic diagram of the grinding body 211 according to embodiment 1 of the present invention.
Fig. 9 is a three-dimensional schematic diagram of the grinding outer ring 212 according to embodiment 1 of the present invention.
Fig. 10 is a top view of the container assembly 1, processing assembly 2, lifting structure 3, water pump 4 and vacuum pump 5 according to embodiment 1 of the present invention.
Fig. 11 is a schematic diagram of Section 1 SEC1; Arrow 1 ARR1 denotes the movement direction of the reversing member 32; Arrow 2 ARR2 denotes the direction in which the lifting base 31 and limit cover 23 descend due to the movement of the traversing member 32.
Fig. 12 is a schematic diagram of Section 2 SEC2.
Fig. 13 is three-dimensional exploded view 1 of the rationing assembly 6.
Fig. 14 is three-dimensional exploded view 2 of the rationing assembly 6.
Fig. 15 is a three-dimensional half-sectional schematic diagram of the rationing container member 61.
Fig. 16 is a three-dimensional schematic diagram of the rationing container member 61.
Fig. 17 is a schematic diagram of Section 3 SEC3; Arrow 3 ARR3 denotes the rotation direction of the rotating disc 63 during rationed discharge; the thick dashed line denotes the outline of the rationing discharge port 622.
Fig. 18 is a schematic diagram of Section 4 SEC4; Arrow 3 ARR3 denotes the rotation direction of the rotating disc 63 during rationed discharge.
Fig. 19 is three-dimensional schematic diagram 1 of the vacuum coffee machine according to embodiment 2 of the present invention.
Fig. 20 is three-dimensional schematic diagram 2 of the vacuum coffee machine according to embodiment 2 of the present invention; the container assembly 81 and the water tank 891 are not shown.
Fig. 21 is three-dimensional exploded view 1 of the vacuum coffee machine according to embodiment 2 of the present invention.
Fig. 22 is three-dimensional exploded view 2 of the vacuum coffee machine according to embodiment 2 of the present invention; the functional part 87, electronic control device 88, and part of the carrier assembly 89 is not shown.
Fig. 23 is a three-dimensional half-sectional schematic diagram of the vacuum coffee machine according to embodiment 2 of the present invention; the functional part 87 is not shown.
Fig. 24 is three-dimensional exploded view 1 of the container assembly 81, sealing structure 82, and processing structure 83 of the vacuum coffee machine according to embodiment 2 of the present invention.
Fig. 25 is three-dimensional exploded view 2 of the container assembly 81, sealing structure 82, and processing structure 83 of the vacuum coffee machine according to embodiment 2 of the present invention.
Fig. 26 is a three-dimensional exploded view of part of the container assembly 81 according to embodiment 2 of the present invention.
Fig. 27 is a three-dimensional half-sectional schematic diagram of part of the container assembly 81 according to embodiment 2 of the present invention.
Fig. 28 is a three-dimensional exploded view of the rotating disc 813, storage rack 814, and sealing structure 82 of embodiment 2 of the present invention.
Fig. 29 is a top view of the rotating disc 813, storage rack 814, and sealing structure 82 of embodiment 2 of the present invention.
Fig. 30 is a schematic diagram of Section 1 SEC3.
Fig. 31 is a three-dimensional schematic diagram of Section 2 SEC4.
Fig. 32 is a three-dimensional exploded view of the blade assembly 832 according to embodiment 2 of the present invention.
Fig. 33 is a three-dimensional schematic diagram of the blade assembly 832 according to embodiment 2 of the present invention.
Fig. 34 is a side view of the blade assembly 832 according to embodiment 2 of the present invention; line 1 LIE1 represents the horizontal plane.
Fig. 35 is a semi-sectional schematic diagram of the vacuum coffee machine according to embodiment 2 of the present invention.
Fig. 36 is a schematic diagram of Detail 1 DTL2.

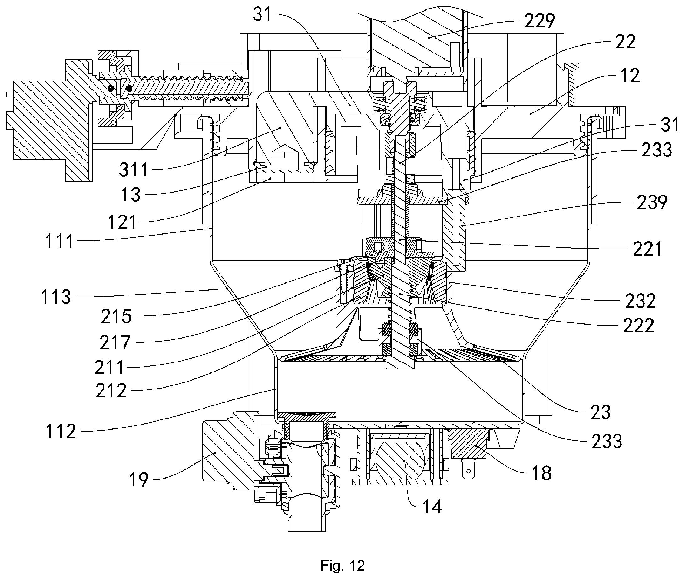

The attached drawing of the specification that best illustrates the technical features of embodiment 1 of the present invention is Fig. 12.

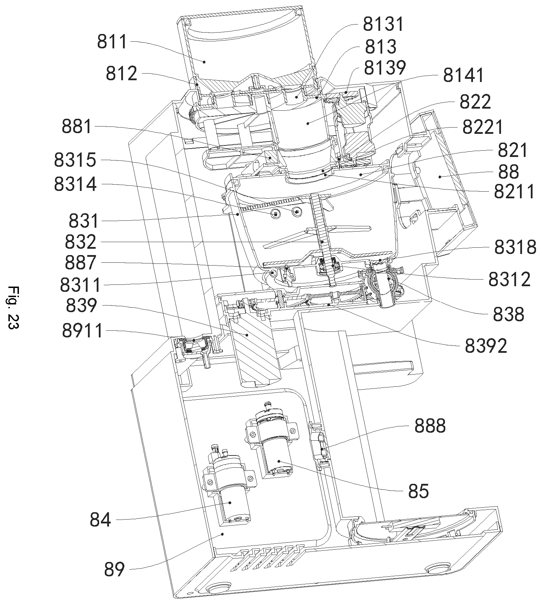

The attached drawing of the specification that best illustrates the technical features of embodiment 2 of the present invention is Fig. 23.

Embodiment 1: Arrow 1 ARR1; Arrow 2 ARR2; Arrow 3 ARR3; Section 1 SEC1; Section 2 SEC2; Section 3 SEC3; Section 4 SEC4; container assembly 1; container member 11; large area segment 111; small area segment 112; guiding segment 113; container lid 12; feeding port 121; lifting seat port 122; lifting seat port wall 123; feeding groove 124; feeding groove bottom wall 125; container lid installation rack 129; sealing cover 13; vibration device 14; heating device 18; release valve 19; the processing assembly 2; grinding assembly 21; grinding body 211; grinding outer ring 212; coarse grinding tooth 213; fine grinding tooth 214; driven disc 215; driven disc protrusion 217; anti-rotation surface 219; driving rod 22; thread segment 221; cylindrical segment 222; grinding power device 229; limit cover 23; through hole 231; enclosing body 232; rotation connection seat 233; limit cover connector 239; lifting structure 3; lifting base 31; sealing cover connector 311; connector groove 312; traversing member 32; reversing groove 321; threaded hole 322; traversing screw 323; traversing power device 328; traversing connection structure 329; lifting chute 33; lifting slider 331; water pump 4; water tank 41; vacuum pump 5; rationing assembly 6; rationing container member 61; bottom through hole 611; rationing container sidewall 612; converging surface 613; protrusion 618; rationing assembly base 62; rationing assembly bottom plate 621; rationing discharge port 622; guide groove 623; hinged portion 629; rotating disc 63; rotating disc groove 631; rotating disc driving device 639; blocking portion 64; feeding hole 641; outlet covered portion 65; lowest point 651; highest point 652; base fixing bracket 67; removable connection structure 68; rationing container lid 69; functional part 7; filtering device 71; drawer member 711; filter basket 712; coffee pot 72; electric control device 8; carrier assembly 9.

Embodiment 2: Section 1 SEC3; Section 2 SEC4; Detail 1 DTL2; Line 1 LINE2; container assembly 81; container member 811; container bottom wall hole 8111; rotation limit protrusion 8112; flange 8113; guide groove 8117; central shaft 8118; container base 812; base hole 8121; rotation limit groove 8122; base installation protrusion 8123; rotating disc 813; rotating disc hole 8131; rotating connection structure 8138; rotating disc power gear 8139; storage rack 814; storage tank 8141; container lid 819; sealing structure 82; sealing and fixing cover 821; bean inlet 8211; linear sliding structure 8212; linear sliding power assembly 8219; movable cover 822; movable cover hole 8221; sealing portion 8222; sealing ring 8223; weighing piece moving body 8224; weighing piece connecting protrusion 8225; movable cover protrusion 8229; movable cover limit rack 823; limit rack hole 8231; weighing piece 824; clearance groove 8249; weighing rack 825; weighing piece support 8254; weighing piece locating edge 8255; processing structure 83; integrated container 831; heating device 8311; rotating shaft hole 8312; water inlet 8314; suction hole 8315; bottom outlet 8318; blade assembly 832; blade drive shaft 8321; locating sleeve 8322; shaft seal 8328; bearing 8329; blade 833; upper blade 8331; middle blade 8332; lower blade 8333; blade edge 8334; cutting tooth 8335; upward tilt angle 8336; lower extension body 8337; shaft connecting portion 8339; outlet valve 838; rotating power unit 839; rotating power end 8391; transmission device 8392; water pump 84; vacuum pump 85; functional part 87; filtering device 871; drawer member 8711; filter basket 8712; coffee pot 872; electric control device 88; weighing sensor 881; position sensor 882; temperature sensor 887; in-place sensor 888; power supply device 889; carrier assembly 89; water tank 891; water source interface 8911; container groove 892; base installation groove 8923.

### Embodiments

Specific embodiments of the present invention will be described later with reference to the attached drawings of the specification.

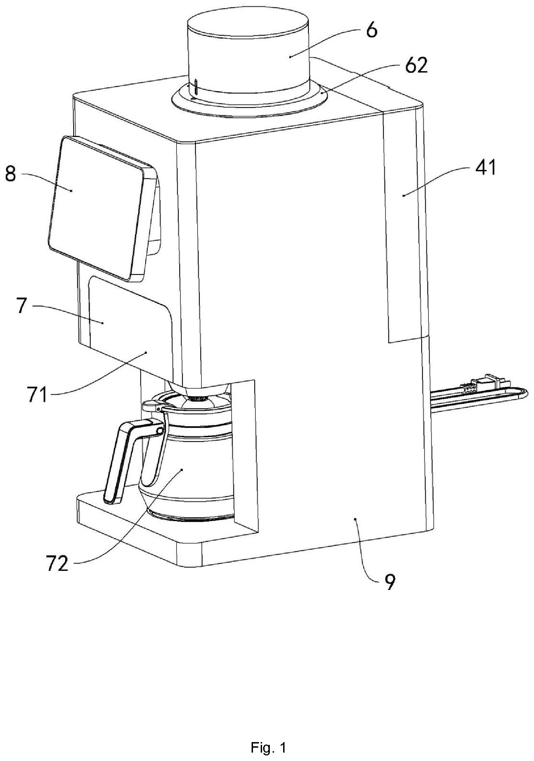

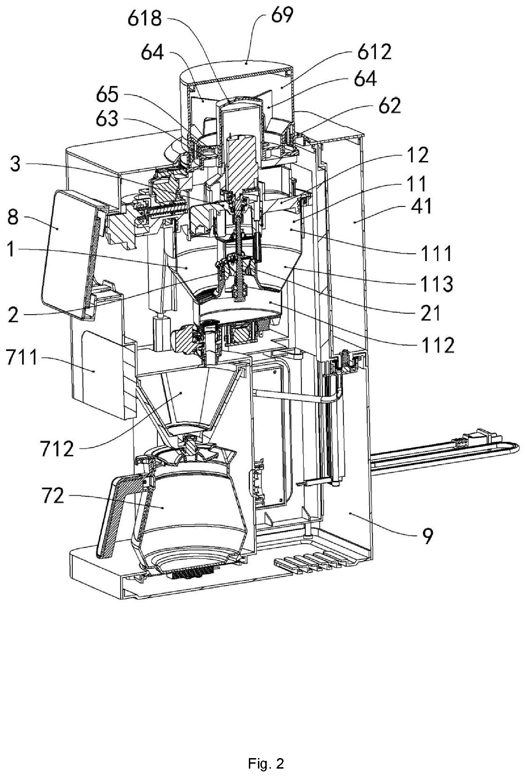

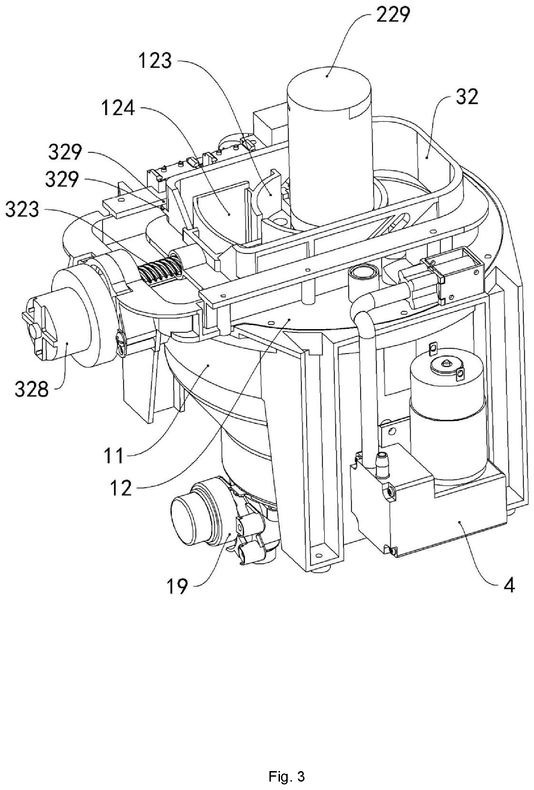

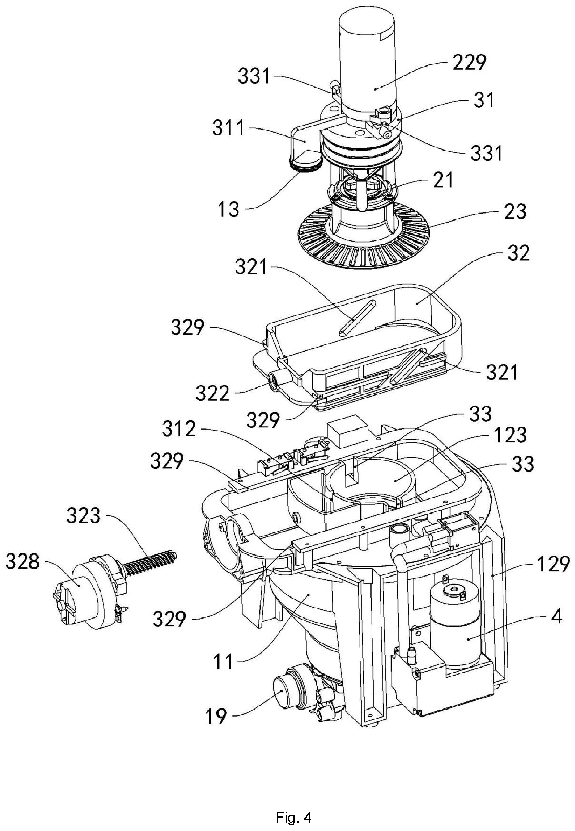

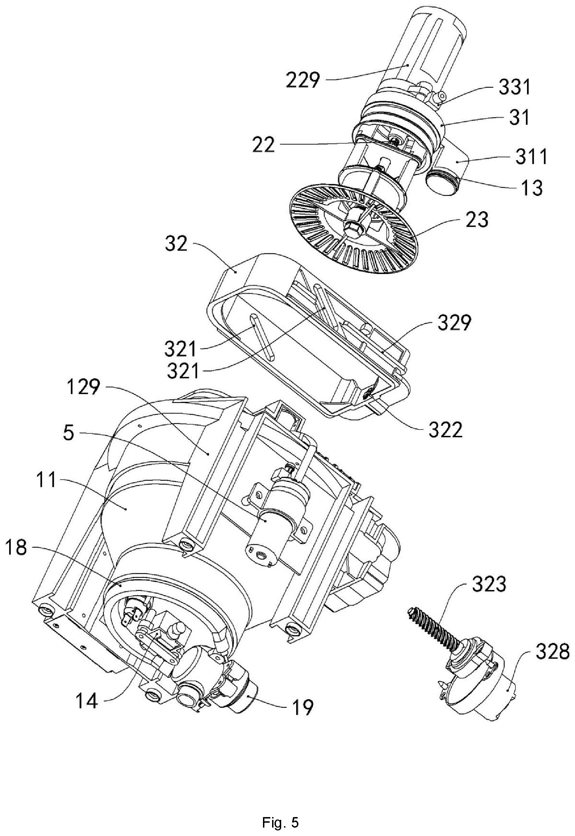

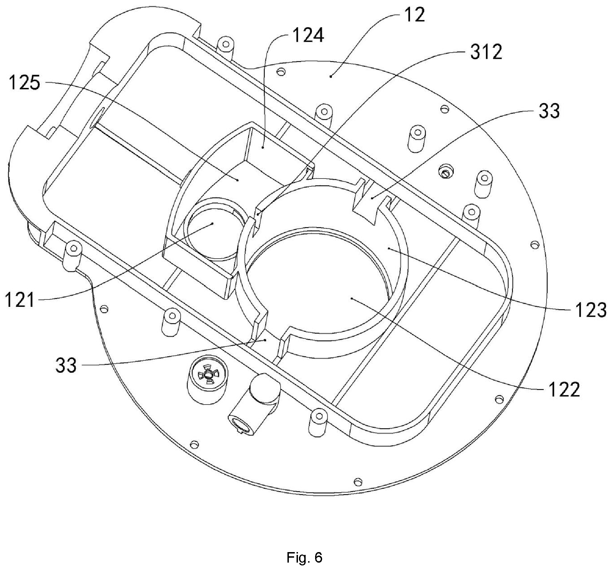

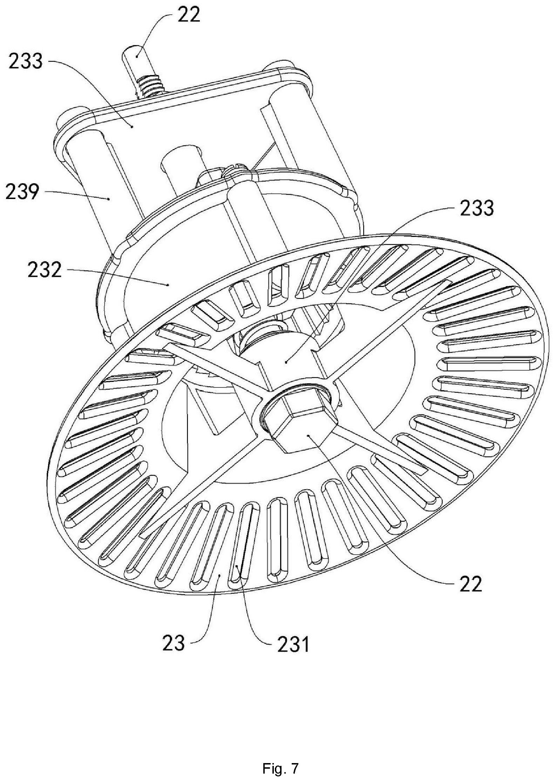

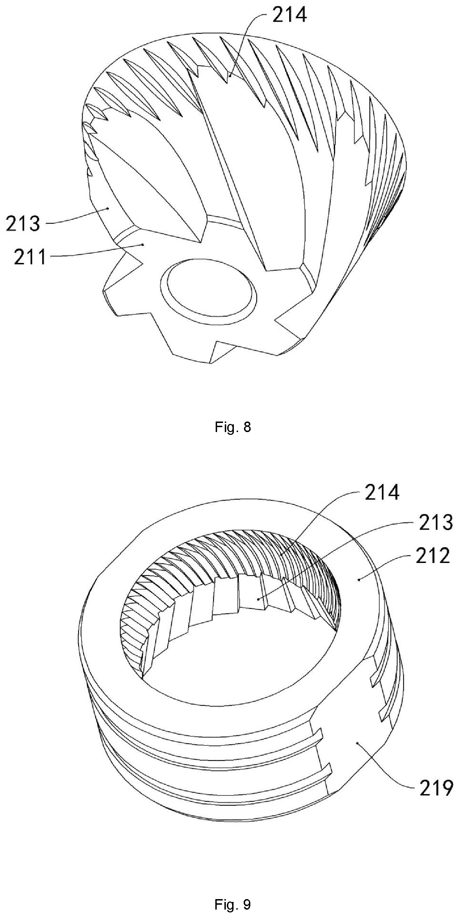

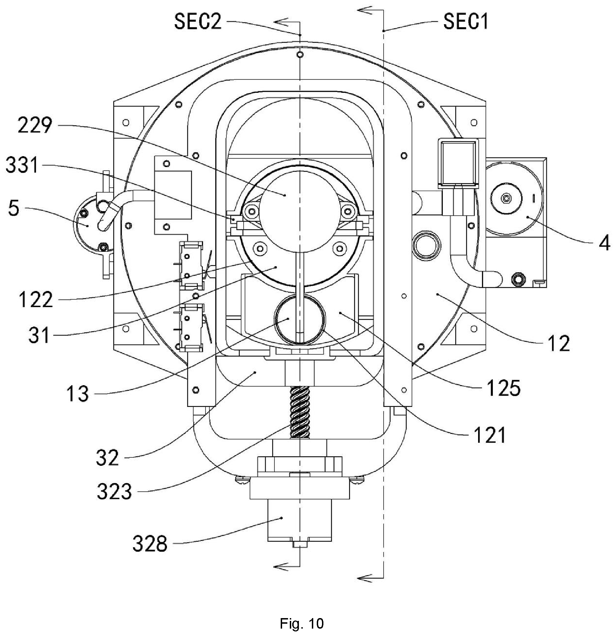

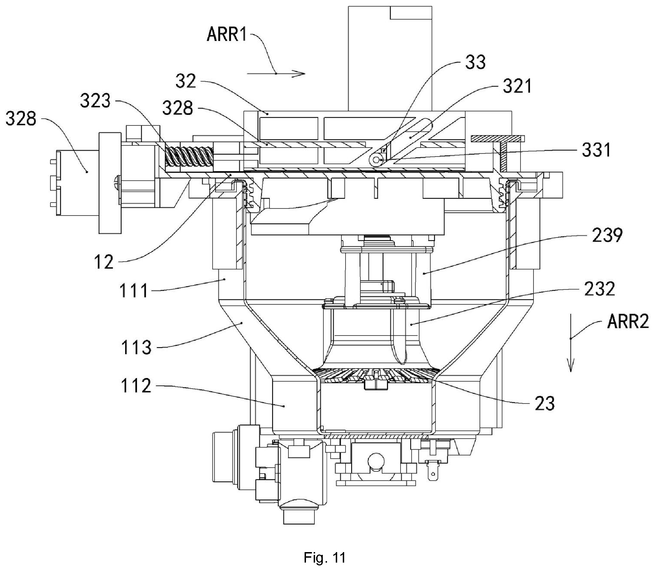

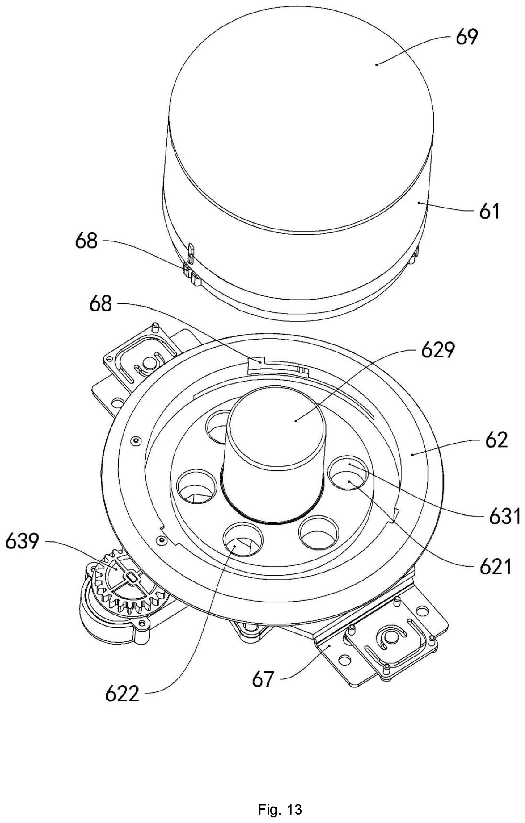

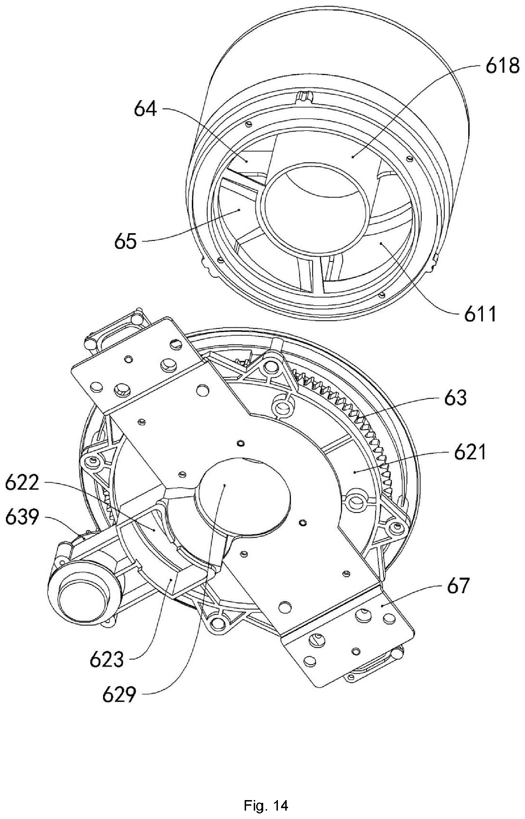

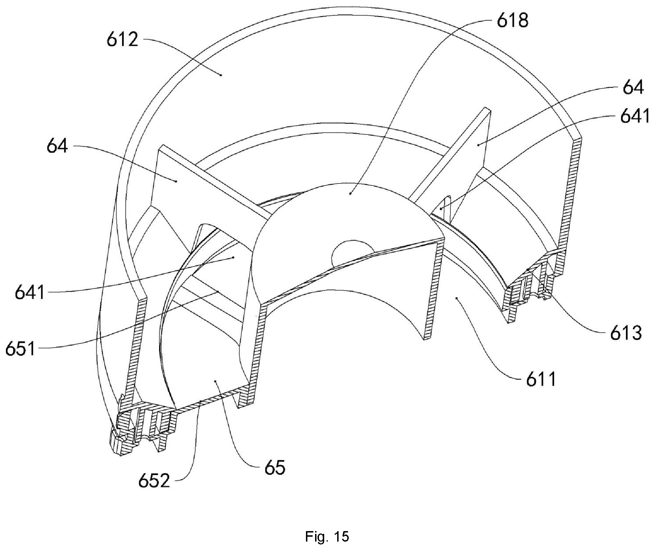

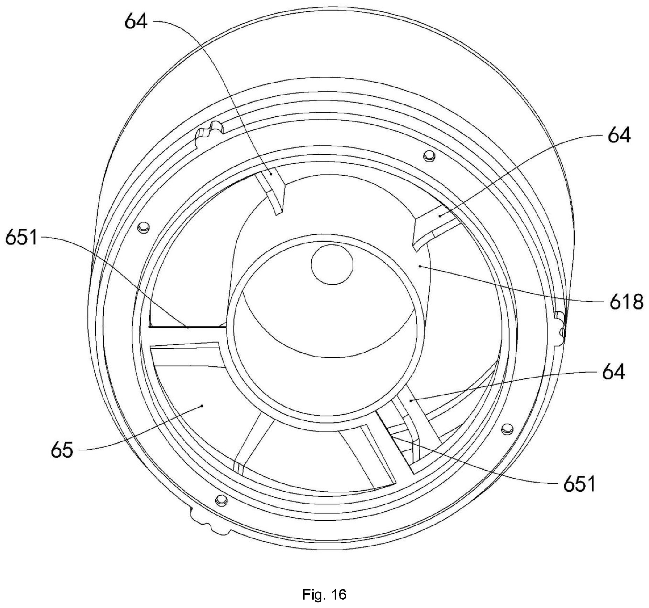

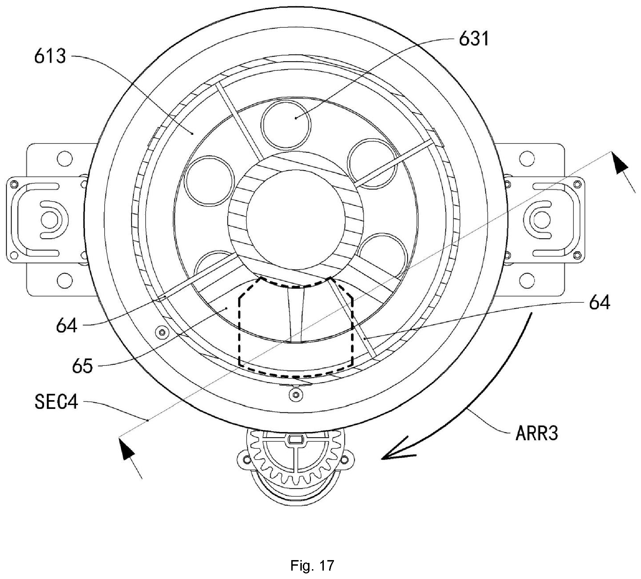

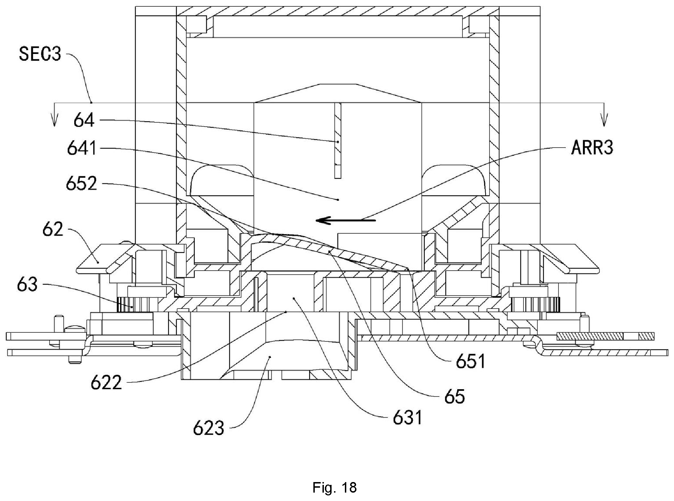

Embodiment 1: As shown in Fig. 1 to Fig. 18, the vacuum coffee machine of the present invention comprises a container assembly 1, a processing assembly 2, a lifting structure 3, an electric control device 8 and a carrier assembly 9.

The electric control device 8 is a prior art circuit board that connects electrical components and is capable of receiving or emitting electrical signals to control one or more of the vibration device 14, heating device 18, release valve 19, water pump 4, vacuum pump 5, grinding power device 229 as a motor and reversing power device 328 as a motor as described later. It is easy to understand that for any embodiment without electrical components, the electric control device 8 can be omitted.

The carrier assembly 9 is used to install and/or place components such as the container assembly 1, processing assembly 2, and electric control device 8. A rationing assembly 6 for containing food ingredients (coffee beans, etc.) is provided at the top of the carrier assembly 9, and is provided with a rationing discharge port 622. After the rationing discharge port 622 is opened, the food ingredients inside the rationing assembly 6 are outputted from the rationing discharge port 622.

Usually, depending on the required processing function, the vacuum coffee machine is also provided with different functional parts 7. For example, when the vacuum coffee machine is used as a coffee machine, the functional part 7 comprises a filtering device 71 and a coffee pot 72, and the filtering device 71 comprises a drawer member 711 and a filter basket 712 on the drawer member 711; the drawer member 711 can move on the carrier assembly 9, allowing the filter basket 712 to be located between the coffee pot 72 and the release valve 19 described later; the liquid containing coffee grounds flows out of the release valve 19 and is filtered through the filter basket 712 to form a coffee liquid, which enters the coffee pot 72.

The container assembly 1 comprises a container member 11 and a container lid 12. The container lid 12 surrounds the container member 11 and is provided with a feeding port 121, and the bottom of the container member 11 is provided with a release valve 19. It is easy to understand that when the feeding port 121, release valve 19, water pump 4, and vacuum pump 5 are all closed, the container lid 12 and the container member 11 enclose to form a closed space.

As an embodiment, the container member 11 is provided with at least one of the heating device 18, water pump 4 connected to water sources such as the water tank 41, and vacuum pump 5 communicated with the atmosphere at one end. For example, the heating device 18 is fixed on the bottom of the container member 11, and the heating device 18 is usually a prior art electric heating device to heat the water, food ingredients, etc. inside the container member 11. Of course, for food ingredients that do not require heating, the heating device 18 can also be omitted. The water pump 4 and the vacuum pump 5 are both fixed on the container lid installation rack 129 of the container lid 12. Both ends of the water pump 4 are connected to the inner cavities of the water tank 41 and the container member 11, respectively; it can inject water into the inner cavity of the container member 11 when started. One end of the vacuum pump 5 is communicated with the atmosphere and the other end is connected to the inner cavity of the container member 11, and it can extract the air inside the container member 11 when started.

The processing assembly 2 comprises a grinding assembly 21, a limit cover 23, and a driving rod 22 with rotational power.

The grinding assembly 21 comprises a grinding outer ring 212 and a grinding body 211 located inside the grinding outer ring 212, and the grinding body 211 or grinding outer ring 212 is connected to the driving rod 22; in other words, the driving rod 22 can drive the grinding body 211 or grinding outer ring 212, so that the grinding body 211 can rotate relative to the grinding outer ring 212 inside the grinding outer ring 212. The inner wall of the grinding outer ring 212 and/or the outer wall of the grinding body 211 are/is provided with grinding teeth (i.e., the upper concept of the coarse grinding teeth 213 and fine grinding teeth 214 described later), and the grinding body 211 rotates relative to the grinding outer ring 212, thereby grinding the food ingredient passing between them, and reducing the particle size of the food ingredient.

The limit cover 23 is provided with a through hole 231, whose shape and size can be adjusted according to the type of the food ingredient to be processed, so that the food ingredient cannot pass through the through hole 231 but is blocked by the limit cover 23. For example, when the food ingredient is coffee beans, the through hole 231 is strip-shaped with a width of about 3mm; a plurality of through holes 231 are evenly distributed around the axis of the limit cover 23, forming a radial shape as a whole.

The lifting structure 3 comprises a lifting base 31 with lifting power.

The limit cover 23 is fixed relative to the lifting base 31 and can be inserted into the container member 11. The outer wall (or outer edge) of the limit cover 23 is in contact with or close proximity to the inner wall of the container member 11, preventing food ingredients such as coffee beans from passing through the gap between the outer wall of the limit cover 23 and the inner wall of the container member 11. It is easy to understand that when the lifting base 31 is raised or lowered, the limit cover 23, which is fixed relative to the lifting base 31, is also removed from or inserted into the container member 11 along with the lifting base 31; it should be noted that the state where limit cover 23 is raised or lowered within the container member 11 and has not been removed from the container member 11 is also the state where the limit cover 23 can be inserted into the container member 11.

The rotation direction of the grinding teeth and the driving rod 22 is set so that the water flow has a tendency to flow from below the limit cover 23 through the gap between the grinding body 211 and the grinding outer ring 212 and toward above the limit cover 23. For example, the grinding teeth are spiral, and the rotation direction of the driving rod 22 is matched with the spiral grinding teeth, so that the water flow has a tendency to flow from below the limit cover 23 through the gap between the grinding body 211 and the grinding outer ring 212 to above the limit cover 23.

The working principle of embodiment 1 is to place any food ingredient such as coffee beans into the container member 11 during use, and the food ingredient such as coffee beans accumulates on the bottom of the inner cavity of the container member 11 due to its own weight; then the lifting base 31 and the limit cover 23 are lowered, and the limit cover 23 limits the food ingredient such as coffee beans to the space formed by the bottom of the inner cavity of the container member 11 enclosed by the limit cover 23; then, water is injected into the container member 11 (either manually or through the water pump 4 connected to the water tank 41 or any other water source), and the driving rod 22 begins to rotate, causing the grinding body 211 or grinding outer ring 212 to rotate, so that the water flow passes through the gap between the grinding body 211 and the grinding outer ring 212, and also drives the food ingredient such as coffee beans to have a tendency to pass through the gap between the grinding body 211 and the grinding outer ring 212; when any food ingredient such as coffee beans passes through the gap between the grinding body 211 and the grinding outer ring 212, the grinding teeth grind the food ingredient such as coffee beans into smaller particles, such as coffee powder, which can achieve the automatic processing of food ingredients.

Compared to a structure that uses a blade to crush food ingredients such as coffee beans, the grinding teeth have a smaller weight and a larger number, and impose a lower requirement on the rotation speed of the driving rod 22 while also crushing food ingredients such as coffee beans to the same particle size, thereby reducing the overall vibration and noise during the automatic processing of food ingredients.

As an embodiment, a vibration device 14 is provided on the container member 11, and is prior art such as a vibration motor, which vibrates food ingredients such as coffee beans inside the bottom of the inner cavity of the container member 11, causing them to collide with one another and increasing the tendency of food ingredients such as coffee beans to pass through the gap between the grinding body 211 and the grinding outer ring 212, and improving efficiency.

As an embodiment, the vibration device 14 is provided on the bottom surface of the container member 11, and the acceleration of the vibration generated by the vibration device 14 has a vector in the height direction. Any food ingredient such as coffee beans is vibrated vertically and bounces vertically on the bottom of the inner cavity of the container member 11, thereby further improving the tendency of the food ingredient such as coffee beans to pass through the gap between the grinding body 211 and the grinding outer ring 212, and further improving efficiency; in addition, since the container member 11 become heavier after being injected with water, the vibration device 14 on the bottom surface of the container member 11 is located below the water inside the container member 11, and its vertical vibration is absorbed by the water inside container member 11, thereby reducing overall vibration during the automatic processing of the food ingredient on the premise of improving efficiency.

The processing assembly 2 comprises a grinding assembly 21, a limit cover 23, and a driving rod 22 with rotational power.

The grinding assembly 21 comprises a grinding outer ring 212 and a grinding body 211 located inside the grinding outer ring 212. The grinding body 211 is in drive connection to the driving rod 22, and the inner wall of the grinding outer ring 212 and/or the outer wall of the grinding body 211 are/is provided with grinding teeth.

The limit cover 23 can be inserted into the container member 11, and the outer wall of the limit cover 23 is in contact with or close proximity to the inner wall of the container member 11. The rotation direction of the grinding teeth and driving rod 22 is set so that the water flow has a tendency to flow below the limit cover 23 through the gap between the grinding body 211 and the grinding outer ring 212 and toward above the limit cover 23. This embodiment can achieve the automatic processing of food ingredients, and also reduce the overall vibration, noise, etc. during the automatic processing of food ingredients.

As an embodiment, the grinding teeth comprise coarse grinding teeth 213 and fine grinding teeth 214, the volume of the fine grinding teeth 214 is smaller than that of the coarse grinding teeth 213, and the coarse grinding teeth 213 are located below the fine grinding teeth 214. It can achieve the rough and fine grinding of food ingredients such as coffee beans sequentially, thereby improving grinding efficiency.

As an embodiment, the inner wall of the grinding outer ring 212 and the outer wall of the grinding body 211 are both provided with grinding teeth. The coarse grinding teeth 213 of the grinding body 211 overlap with the coarse grinding teeth 213 of the grinding outer ring 212, and the fine grinding teeth 214 of the grinding body 211 overlap with the fine grinding teeth 214 of the grinding outer ring 212 in the height direction. The grinding teeth on the inner wall of the grinding outer ring 212 and the outer wall of the grinding body 211 are both provided with the grinding teeth that fit with each other, which can improve the grinding efficiency and effectiveness of food ingredients such as coffee beans.

As an embodiment, the limit cover 23 is provided with an enclosing body 232, and the grinding outer ring 212 is provided with an anti-rotation surface 219 embedded into the enclosing body 232. This embodiment can ensure that the grinding outer ring 212 is firmly connected to the limit cover 23.

As an embodiment, the limit cover 23 is fixedly provided with a rotation connection seat 233, and the driving rod 22 is rotatably connected to the rotation connection seat 233. For example, a bearing (not shown in the attached figure) is provided on the rotation connection seat 233, and the driving rod 22 is rotatably connected to the rotation connection seat 233 through the bearing.

As an embodiment, the enclosing body 232 is fixedly provided with a limit cover connector 239, and the top of the limit cover connector 239 is fixedly connected to the lifting base 31.

As an embodiment, there are at least two rotation connection seats 233, where the topmost rotation connection seat 233 is fixedly connected to the limit cover connector 239, the bottommost rotation connection seat 233 is fixedly connected to the limit cover 23, and the grinding body 211 is located between the topmost and bottommost rotation connection seats 233. Even if only one side of the grinding body 211 has any food ingredient such as coffee beans, the driving rod 22 is driven by the grinding body 211 to have a tendency to bend toward the other side (other than the side containing the food ingredient such as coffee beans); the topmost rotation connection seat 233 and the bottommost rotation connection seat 233 can ensure that the driving rod 22 does not bend, thereby ensuring that the particle size of the food ingredient such as coffee beans processed by the grinding assembly 21 is relatively uniform.

As an embodiment, the contour of the lower part of the inner cavity of the grinding outer ring 212 is generally frustum-shaped, and the bottom surface of this frustum is relatively large in diameter. Food ingredients such as coffee beans are more likely to enter between the grinding outer ring 212 and the grinding body 211, which can improve grinding efficiency.

As an embodiment, the container assembly 1 comprises a container member 11 and a container lid 12, and the container lid 12 surrounds the container member 11 and is provided with a feeding port 121; the lifting structure 3 comprises a lifting base 31 with lifting power; the processing assembly 2 comprises a limit cover 23 that is fixed relative to the lifting base 31 and can be inserted into the container member 11, and the outer wall of the limit cover 23 is in contact with or close proximity to the inner wall of the container member 11. This embodiment can ensure that food ingredients such as coffee beans enter below the limit cover 23.

As an embodiment, the container member 11 comprises a large area segment 111, a small area segment 112, and a guiding segment 113; the guiding segment 113 is located between the large area segment 111 and the small area segment 112; the outer wall of the limit cover 23 is in contact with or close proximity to the inner wall of the small area segment 112; the feeding port 121 directly faces the guiding segment 113. It is easy to understand that the inner cavity area of the small area segment 112 is smaller than that of the large area segment 111, and the inner wall of the guiding segment 113 is connected to the inner walls of the small area segment 112 and the large area segment 111, respectively. After the lifting base 31 drives the limit cover 23 to ascend, when any food ingredient such as coffee beans falling from the feeding port 121 avoids the limit cover 23 and falls onto the guiding segment 113, it is guided by the guiding segment 113 to fall into the small area segment 112; it can ensure that the food ingredient such as coffee beans enters the small area segment 112 of the container member 11, thereby ensuring that the food ingredient such as coffee beans can be processed by the grinding assembly 21.

As an embodiment, the inner cavities of the large area segment 111 and the small area segment 112 are both cylindrical, the limit cover 23 is circular when viewed from above, and the inner cavity of the guiding segment 113 is frustum-shaped.

As an embodiment, the top of the limit cover 23 tilts downward, for example, the top of the limit cover 23 is a frustum-shaped side whose top circle has a smaller diameter and whose bottom circle has a larger diameter. Even if any food ingredient such as coffee beans falls onto the limit cover 23 from the feeding port 121, the top surface of the limit cover 23 can guide the food ingredient such as coffee beans to the guiding segment 113, ensuring that the food ingredient such as coffee beans enters the small area segment 112 of the container member 11 and can be processed by the grinding assembly 21.

As an embodiment, the container assembly 1 also comprises a sealing cover 13 that completely covers the feeding port 121; the container lid 12 is provided with a feeding groove 124, the bottom wall of the feeding groove 124 is the feeding groove bottom wall 125, and the feeding port 121 is provided on the feeding groove bottom wall 125. Any food ingredient such as coffee beans (usually weighed, etc.) that falls from the rationing discharge port 622 of the rationing assembly 6 enters the feeding groove 124 and is buffered. After the sealing cover 13 is opened, the food ingredient such as coffee beans enters the container member 11 from the feeding port 121. After the sealing cover 13 is closed, the container member 11 and the container lid 12 are sealed; in other words, on the premise that the sealing of the container member 11 and the container lid 12 is ensured, the entry of any food ingredient such as coffee beans into the container member 11 is facilitated.

As an embodiment, the feeding groove bottom wall 125 tilts toward the feeding port 121. Any food ingredient such as coffee beans is guided by the feeding groove bottom wall 125 into the feeding port 121, ensuring that the food ingredient such as coffee beans fully enters the feeding port 121.

As an embodiment, the lifting base 31 is provided with a sealing cover connector 311, and the sealing cover 13 is fixedly connected to the sealing cover connector 311. When the lifting base 31 drives the limit cover 23 to ascend, the sealing cover 13 also ascends with the lifting base 31, causing the feeding port 121 to open. At this time, any food ingredient such as coffee beans in the feeding groove 124 can enter the container member 11 from the feeding port 121. In addition, as described earlier, any food ingredient such as coffee beans can also enter below the limit cover 23. When the lifting base 31 drives the limit cover 23 to descend, the sealing cover 13 also descends with the lifting base 31, causing the feeding port 121 to close. At this time, the feeding groove 124 can continue to store the food ingredient such as coffee beans, and the container member 11 and the container lid 12 are also sealed; in addition, as described earlier, the limit cover 23 limits the food ingredient such as coffee beans under it, allowing the food ingredient such as coffee beans to be processed by the grinding assembly 21. In summary, only one lifting base 31 (in other words, only one power unit) can control the limit cover 23 and the sealing cover 13, simplifying the structure and reducing costs.

As an embodiment, the lifting seat port wall 123 is provided with a connector groove 312 that avoids the sealing cover connector 311. The sealing cover connector 311 does not have to bypass the lifting seat port wall 123, which can reduce the overall height of the lifting base 31 and the sealing cover connector 311 on it.

As an embodiment, the lifting structure 3 also comprises a traversing member 32 with lateral movement power and provided with a reversing groove 321. The container lid 12 is provided with a lifting seat port wall 123, and a lifting base 31 is inserted into the lifting seat port wall 123 and connected to the container lid 12 for linear sliding. For example, the lifting chute 33 on the container lid 12 is used to fit with the lifting slider 331, and/or the lifting base 31 is inserted into the lifting seat port wall 123 to achieve linear sliding connection between the lifting base 31 and the container lid 12. Usually, the container lid 12 is provided with a lifting seat port 122, and the outer edge of the lifting seat port 122 extends to form a lifting seat port wall 123. A sealing ring (not shown in the attached figure) is installed on the lifting base 31 to ensure the sealing between the lifting base 31 and the lifting seat port wall 123. One of the lifting base 31 and the reversing member 32 is provided with a reversing groove 321, and the other is provided with a lifting slider 331 inserted into the reversing groove 321. For example, the lifting structure 3 also comprises a traversing screw 323, which is connected to the container lid 12 through a transverse linear sliding connection (achieved through a traversing connection structure 329 for chutes or linear guides, etc.). The traversing member 32 is provided with a threaded hole 322, and a traversing screw 323 with rotational power (driven by a traversing power device 328 such as a motor) is screwed into the threaded hole 322 to provide lateral movement power to the traversing member 32. During the lateral movement of the reversing member 32, the inner wall of the reversing groove 321 presses against the lifting slider 331, causing the lifting base 31 to ascend and descend. There is no need to install a screw, etc. above the lifting base 31, which can reduce the overall height of the lifting base 31.

As an embodiment, the grinding outer ring 212 is fixed relative to the limit cover 23; the grinding body 211 is connected to the driving rod 22 and can move along the driving rod 22, causing the gap between the grinding body 211 and the grinding outer ring 212 to change; when the gap between the grinding body 211 and the grinding outer ring 212 is small, the particle size of any food ingredient such as coffee beans obtained by grinding is relatively small; on the contrary, the particle size of any food ingredient such as coffee beans obtained by grinding is relatively large; thus, the particle size of any food ingredient such as coffee beans can be adjusted as necessary for grinding. For example, the contours of the grinding body 211 and the upper part of the inner cavity of the grinding outer ring 212 are both generally frustum-shaped, but there is a difference in slope between the side walls of the two frustums.

A coffee making method based on a vacuum coffee machine, comprising a container assembly 1, an electric control device 8, and a processing assembly 2 arranged inside the container assembly 1. For example, the electric control device 8 is an STM32 microcontroller.

The container assembly 1 is provided with a heating device 18, an atmospheric solenoid valve, a release valve 19, a temperature sensor, and an air pressure sensor, and is connected to a vacuum pump 5 and a water pump 4. As described earlier, the heating device 18 is used to heat the container assembly 1, the vacuum pump 5 is used to vacuum the container assembly 1, and the water pump 4 is used to inject water into the container assembly 1.

The processing assembly 2 comprises a grinding assembly 21 and a grinding power device 229; the grinding assembly 21 comprises a grinding outer ring 212 and a grinding body 211 located inside the grinding outer ring 212, and is connected to the output end of the grinding power device 229. As described earlier, the grinding power device 229 drives the grinding body 211 to rotate and grind coffee beans between the grinding outer ring 212 and the grinding body 211. The grinding power device 229, heating device 18, atmospheric solenoid valve, release valve 19, temperature sensor, air pressure sensor, vacuum pump 5, and water pump 4 are electrically connected to the electric control device 8 respectively.

The coffee making method based on a vacuum coffee machine according to an embodiment of the present invention, which uses a vacuum coffee machine and comprises the following steps:
injecting coffee beans into the container assembly 1; specifically, coffee beans of the set quantity, such as 18.6g, 31.0g and 46.0g, are injected into the container assembly 1 through the rationing assembly 6 described later. The set quantity of coffee beans can be adjusted according to the desired coffee concentration. For example, a base value of 18.6g of coffee beans can be adjusted within concentration levels 1-6. Specifically, the quantity of coffee beans set based on the concentration level is the difference between the concentration level minus 1 multiplied by 0.2, added by 1, and multiplied by the base value of coffee beans, i.e., the quantity of coffee beans set based on the concentration level = base value of coffee beans x (1+0.2x (concentration level - 1)).
pre-soaking coffee beans; specifically, injecting pre-soaked water into the container assembly 1, and then, while the container assembly 1 is sealed, starting the heating device 18 to heat the water inside container assembly 1 to the pre-soaked water temperature during the pre-soaked water heating time, and maintaining it for the pre-soaked time to form pre-soaked coffee beans. For example, the water inside the container assembly 1 is heated to 45°C within 35s; the temperature sensor needs to read 45°C±0.8°C (e.g., through PID control) for ≥5s to judge that the pre-soaked water temperature is reached, and this state is maintained for 3.5 minutes. The pre-soaking water volume is a fixed value, such as 300mL, to achieve mix water and coffee beans sufficiently, and soften cell walls of coffee beans.
vacuuming the container assembly 1; specifically, starting the vacuum pump 5 to vacuum the container assembly 1 to the vacuum pressure. For example, the vacuum pump 5 is started to vacuum the container assembly 1 to -42kPa.
wet-grinding pre-soaked coffee beans; specifically, starting the grinding power device 229 while the container assembly 1 is sealed (i.e., under the vacuum pressure) to rotate the grinding body 211 at the grinding speed for a grinding time. For example, the grinding body 211 rotates at a speed of 60rpm to grind the pre-soaked coffee beans.
brewing coffee; specifically, communicating the container assembly 1 with the atmosphere (achieved through the atmospheric solenoid valve electrically connected to the electric control device 8, etc.) and injecting water into the container assembly 1 until the total water volume is reached (achieved through a weight sensor or the flow rate on the water pump 4). For example, 18.6g of coffee beans at concentration level 3 corresponds to 300mL of water, 31.0g corresponds to 500mL of water, and 46.0g corresponds to 800mL of water. The heating device 18 is started to heat the water inside the container assembly 1 to the extraction water temperature, and maintain it for the extraction time to form a coffee liquid. For example, the temperature sensor needs to read 96°C±0.8°C for ≥5s to judge the starting point of the extraction time.
outputting coffee; specifically, starting the release valve 19 to output the coffee liquid from the release valve 19.

Compared to grinding coffee beans through a blade, the coffee making method based on a vacuum coffee machine according to an embodiment of the present invention enables coffee beans to be ground, heated, and extracted by the grinding body 211 under vacuum conditions, and avoids or reduces the chance of coffee powder to transfer between different units and come into contact with oxygen in the air, thereby minimizing oxidation and maximizing the preservation of volatile oils, antioxidants, and enzymes in coffee powder; it can also reduce the overall vibration and operating noise of the coffee machine.

The coffee making method based on a vacuum coffee machine according to an embodiment of the present invention achieves multiple solutions through the reasonable setup of the above parameters. For example, it supports intestinal micro-ecological balance through polyphenols, melanoidins, and coffee-derived fibers; these ingredients may have prebiotic-like effects and affect the "gut liver axis" and "gut metabolism axis". For example, the cardiovascular balance solution: paper filter coffee, intended to reduce cholesterol-raising diterpenes while providing antioxidant components; it still contains caffeine and cannot replace medical care. For example, the longevity solution: balanced daily coffee, intended to align with the evidence shown in research that "a moderate coffee intake is part of a healthy diet and associated with longevity"; its health effects depend on the overall lifestyle. For example, the heart-friendly enhanced filtering and brewing solution: high antioxidant, paper filter coffee, oriented to people of heart concerns, intended to reduce cholesterol-raising components; it still contains caffeine and cannot replace medication or medical advice. For example, the mild gastrointestinal / low acid solution: low acid cold style coffee, oriented to users with stomach sensitivity and easy reflux; if storage is required, refrigerated storage is required, and it is advised to consume it on the same day. For example, the mild and smooth warm extraction solution: a warm and gentle coffee style, designed to be more stomach friendly than classical hot-extracted coffee, while maintaining richness and aroma; it is not completely low acid. For example, the liver supporting concentrated alcohol solution: paper-filter-free full-body taste coffee rich in natural oils and diterpenes, used to support liver health based on observational research evidence; it may increase LDL cholesterol, and is not recommended for high LDL users or those currently using lipid-lowering therapies. For example, the brain and performance enhancement solution: a high caffeine, high flavor formula, oriented to focus and performance needs; it is not suitable for people with pregnancy, arrhythmia, uncontrolled hypertension, or severe anxiety; please pay attention to the daily total caffeine intake. For example, the anti-oxidation and longevity maximizing solution: laboratory-optimized to provide a higher anti-oxidation levels than standard brewing, and support healthy aging and oxidation balance; it cannot replace a diet rich in fruits and vegetables. For example, the energy and fat burning support solution: intended to provide refreshing caffeine and chlorogenic acid, which can improve the metabolic rate to some extent as part of an active lifestyle; it is not an independent weight loss regimen. The interface will display a daily caffeine upper limit prompt. For example, the daily brain protection solution: balanced coffee, intended to support daily focus and long-term brain health, and reflect the observational association between coffee and lower neurodegenerative risks; it is not a means of treatment or curing. For example, the kidney-friendly moderate solution: moderate strength, paper filter coffee style; if there is any kidney health concern, the final intake and applicability should follow the advice of a nephrologist. For example, the intestinal flora support solution: intended to provide polyphenols and coffee derived fibers, which may support intestinal flora balance and the gut liver axis; it is not a probiotic product, nor is it a therapy for gastrointestinal diseases.

As an embodiment, the grinding time is the set quantity of coffee beans divided by 31 and multiplied by 30.

As an embodiment, the processing assembly 2 comprises a limit cover 23 located above the grinding body 211. It is easy to understand that the grinding body 211 is located in the space formed by the inner wall of the grinding body 211 and the container member 11. In the step of wet-grinding pre-soaked coffee beans, when the grinding time is ≥60s, the grinding body 211 runs in a pulse mode for the grinding time, and the pulse mode is the pulse stop time after the grinding body 211 rotates for a pulse opening time within one pulse cycle. For example, in a 5s pulse cycle, the grinding body 211 rotates for 4s and then stops for 1s. For this embodiment, if the set quantity of coffee beans is large, coffee can enter between the grinding body 211 and the grinding outer ring 212 intermittently, thereby ensuring that all coffee beans are fully ground by the grinding body 211.

As an embodiment, the grinding speed is 60rpm. This embodiment can ensure that all coffee beans are fully ground by the grinding body 211.

As an embodiment, the upper limit of the grinding time is 130s. The upper limit of the grinding time in this embodiment is a rigid parameter, which can improve the operating reliability of the vacuum coffee machine.

As an embodiment, the pre-soaking water temperature is 35-55°C. This embodiment can ensure that all coffee beans are fully ground by the grinding body 211.

As an embodiment, the vacuum pressure is -25~-50kPa. This embodiment can ensure the minimal oxidation of coffee beans, etc. while ensuring the reliable operation of the vacuum coffee machine.

As an embodiment, the vacuum pressure is -36kPa and the extraction water temperature is 94°C. This embodiment can reduce cholesterol-raising components and is relatively friendly to the heart.

As an embodiment, the extraction water temperature is ≤99°C and ≥94°C. In the process of coffee brewing, the extraction water temperature should be high enough to ensure extraction quality. The container assembly 1 is communicated with the atmosphere, so when water boils away, it turns into steam and is discharged from the container assembly 1, resulting in the excessive concentration of the coffee liquid. This embodiment can ensure extraction quality while preventing the excessive concentration of the coffee liquid arising from the boiling of the water in the container assembly 1.

The improved coffee bean rationed input structure according to an embodiment of the present invention comprises a rationing assembly 6, which comprises a rationing container member 61, a rationing assembly base 62, and a rotating disc 63 with rotational power.

The rationing container member 61 is provided with a bottom through hole 611 and a rationing container sidewall 612. For example, the bottom through hole 611 is circular in shape as a whole.

The rationing assembly base 62 comprises a rationing assembly bottom plate 621 provided with a rationing discharge port 622; the rationing container member 61 is fixed on the rationing assembly base 62.

The rotating disc 63 is provided with a plurality of rotating disc grooves 631 that run through it; in other words, the top and bottom of the rotating disc grooves 631 are both connected to the outside. The volume of the rotating disc groove 631 can be adjusted through the cross-sectional area, thickness, etc. of the rotating disc groove 631.

The rotating disc 63 is hinged to the rationing assembly base 62, and a rotating disc groove 631 whose bottom is in contact with the rationing assembly bottom plate 621 is provided in the rotating disc groove 631. For example, the rationing assembly base 62 is provided with a cylindrical hinged portion 629, and the rotating disc 63 is provided with a hinged portion 629 that is in contact with a circular hole to be hinged to the rationing assembly base 62.

The rationing assembly 6 also comprises an outlet covered portion 65, which gradually lowers along the axis of the rotating disc 63, and has a lowest point 651 and a highest point 652.

The outlet covered portion 65 is provided in the rationing container member 61 and covers part of the bottom through hole 611; in other words, part of the bottom through hole 611 is covered by the outlet covered portion 65.

The lowest point 651 of the outlet covered portion 65 is in contact with the bottom surface of the rotating disc 63.

The working principle is that coffee beans are placed in the rationing container member 61 before use, are blocked by the rationing container sidewall 612, and gather inside the rationing container member 61. Some coffee beans fall into each rotating disc groove 631 due to their own weight and stay in the rotating disc groove 631, while others cannot enter the rotating disc groove 631 but gather at the top of the rotating disc groove 631. When it is necessary to output coffee beans from the vibrating discharge port 622, the rotating disc driving device 639 is controlled to start through the electric control device 8, so that the rotating disc 63 rotates. During the rotation of the rotating disc 63, the coffee beans inside the rotating disc groove 631 fall into the rationing discharge port 622 as they pass through it. Since the capacity of each rotating disc groove 631 is the same and the quantity of coffee beans in it is also the same, by controlling the number of rotating disc grooves 631 passing through the rationing discharge port 622, the rationed output of coffee beans can be achieved. Usually, the rotating disc grooves 631 are uniformly distributed around the axis of the rotating disc 63, so the number of rotating disc grooves 631 passing through the rationing discharge port 622 can be controlled by controlling the rotation angle of the rotating disc 63.

Among the coffee beans gathering at the top of the rotating disc groove 631, some coffee beans rotate with the rotating disc 63 and push other coffee beans through the outlet covered portion 65. When other coffee beans move from the lowest point 651 to the highest point 652 (or from the highest point 652 to the lowest point 651), their height changes, so that the posture of each coffee bean changes, producing a vibration effect similar to shaking coffee beans vertically, and making it easier for coffee beans to enter the empty rotating disc grooves 631. This can ensure that the quantity of coffee beans in each rotating disc groove 631 is relatively uniform and improve the accuracy of rationing.

As an embodiment, the highest point 652 of the outlet covered portion 65 is located in its middle. It is easy to understand that there are lowest points 651 on both sides of the highest point 652. For example, the outlet covered portion 65 is mirror symmetric about the axis passing through the rotating disc 63. This embodiment does not require distinguishing between the forward and reverse directions of the rotating disc 63, which helps reduce costs.

As an embodiment, it also comprises a blocking portion 64 fixed inside the rationing container member 61, and a feeding hole 641 is provided in the lower part of the blocking portion 64. In this embodiment, the blocking portion 64 blocks the upper coffee beans that rotate with the rotating disc 63, changing the posture of each coffee bean, further ensuring that the quantity of coffee beans in each rotating disc groove 631 is relatively uniform and improving the accuracy of rationing.

As an embodiment, there is an overlap between the outlet covered portion 65 and the blocking portion 64 when viewed from above, and the rotation direction of the rotating disc 63 causes the coffee beans to have a tendency to move from the lowest point 651 to the highest point 652. In this embodiment, the coffee beans are blocked by the blocking portion 64 when ascending, changing the posture of each coffee bean. This further ensures that the quantity of coffee beans in each rotating disc groove 631 is relatively uniform and improves the accuracy of rationing.

As an embodiment, the rationing container member 61 is provided with a converging surface 613, the height of the rationing container member 61 gradually lowers toward the bottom through hole 611, and the feeding hole 641 directly faces the bottom through hole 611. This embodiment can ensure that the coffee beans enter the rotating disc groove 631 while also changing the posture of each coffee bean, further ensuring that the quantity of coffee beans in each rotating disc groove 631 is relatively uniform and improving the accuracy of rationing.

As an embodiment, a protrusion 618 is provided in the rationing container member 61, and both ends of the blocking portion 64 are fixedly connected to the protrusion 618 and the rationing container sidewall 612, respectively, such as by integral molding. This embodiment can further ensure that the quantity of coffee beans in each rotating disc groove 631 is relatively uniform, improve the accuracy of rationing, and ensure the strength of the rationing container member 61.

As an embodiment, the bottom of the rationing container member 61 can be detachably connected to the rationing assembly base 62. For example, the bottoms of both the rationing container member 61 and the rationing assembly base 62 are provided with a removable connection structure 68, which is a threaded or turnbuckle structure.

As an embodiment, it also comprises a rationing container lid 69, which covers the top opening of the rationing container member 61 and is fixedly connected to the top of the rationing container member 61, such as detachable connection or integral connection. This embodiment can reduce the oxidation of the coffee beans in the rationing container member 61 by air.

As an embodiment, the improved coffee bean rationed input structure is used for coffee machines. The rationing container member 61 is fixedly provided with a base fixing bracket 67, which is fixedly connected to the carrier assembly 9 of the coffee machine.

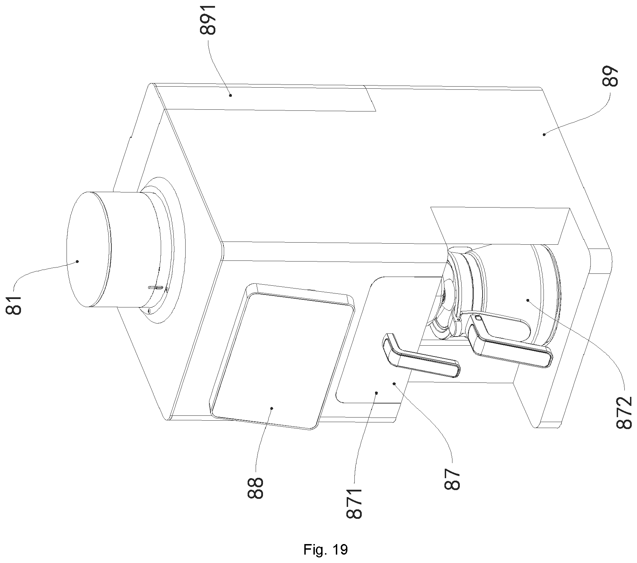

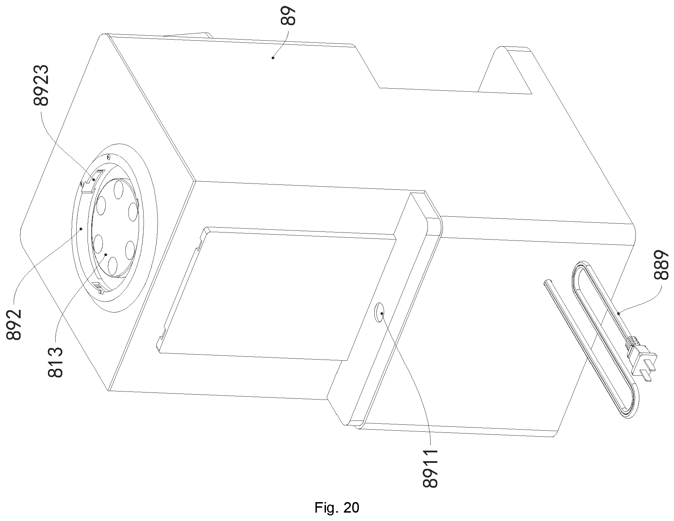

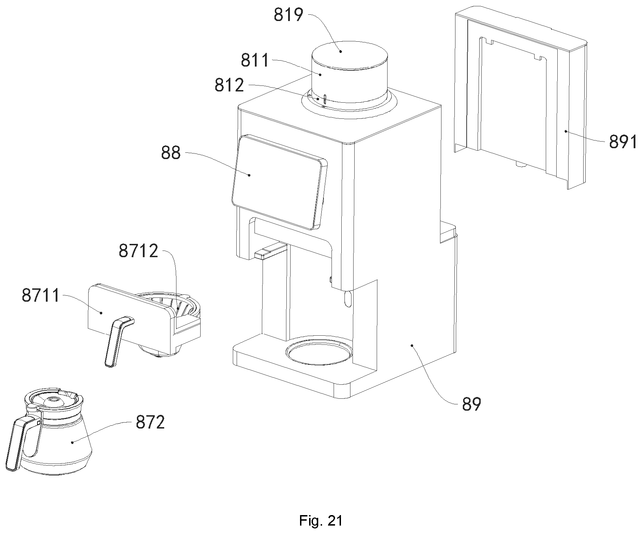

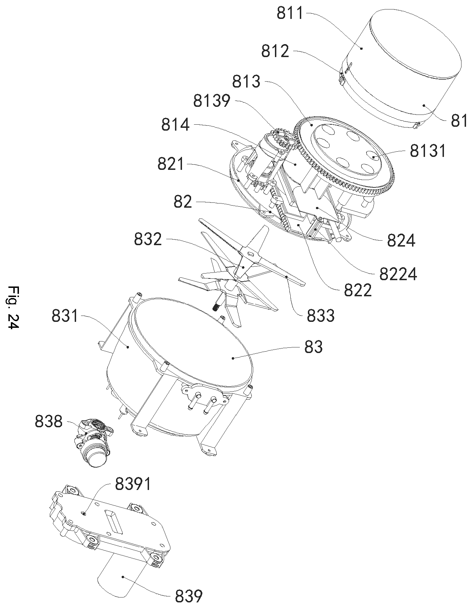

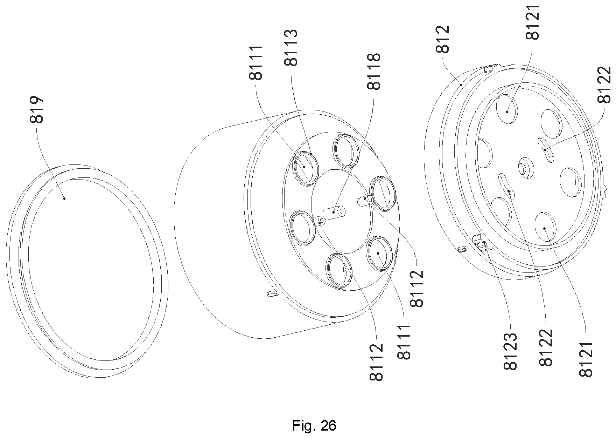

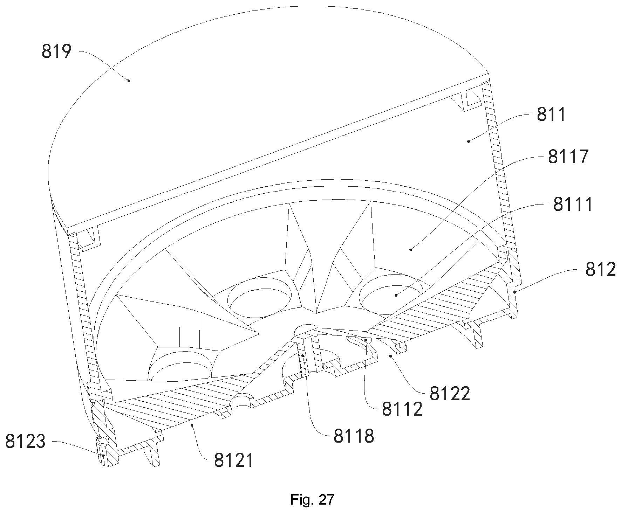

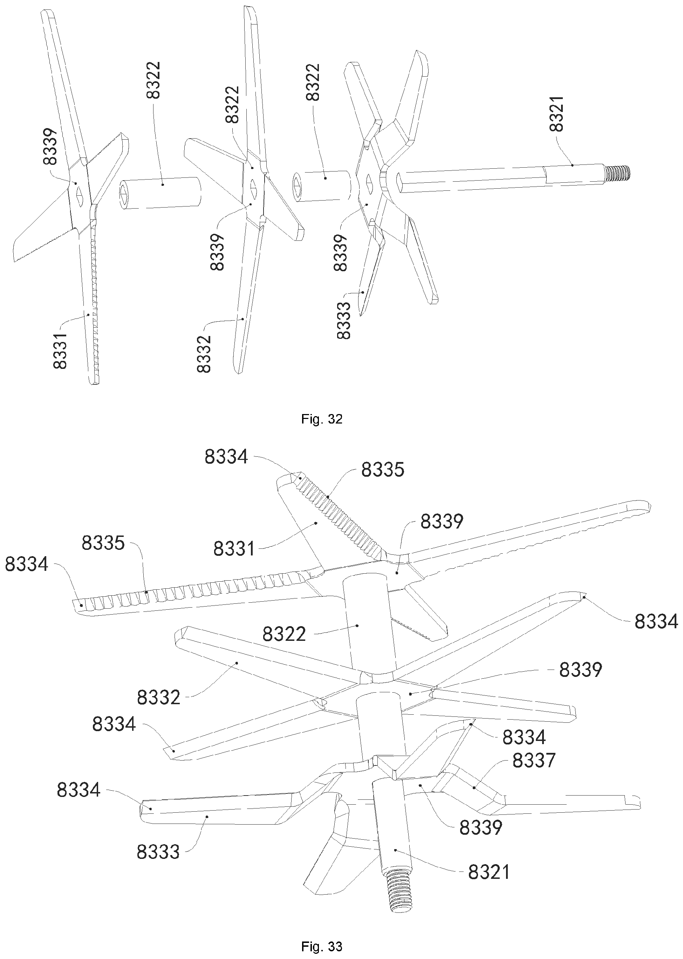

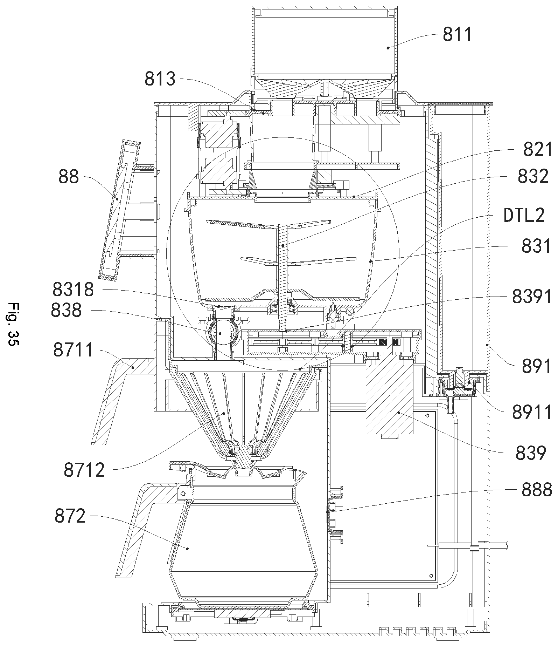

Embodiment 2: As shown in Fig. 19 to Fig. 36, a vacuum coffee machine, comprising a container assembly 81, a sealing structure 82, a processing structure 83, and a carrier assembly 89 having a water source interface 8911. As shown in Fig. 20, the carrier assembly 89 is provided with a water tank 891, which is connected to the water source interface 8911 on the carrier assembly 89 and supplies water to the water source interface 8911 through the water tank 891. It is easy to understand that water can also be supplied to the water source interface 8911 through a water pipe or other means.

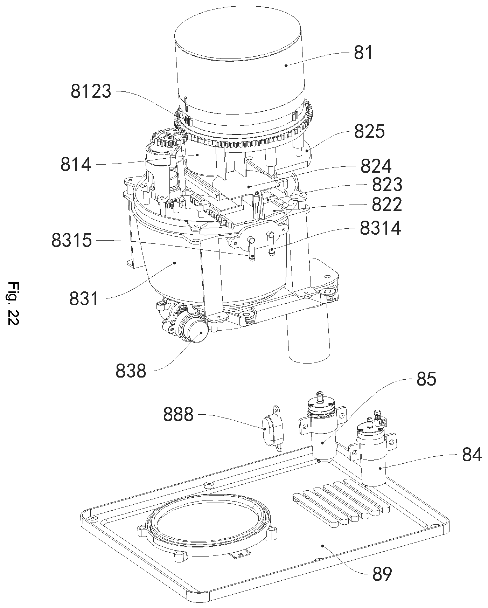

The carrier assembly 89 is provided with an electronic control device 88, a water pump 84, and a vacuum pump 85; as shown in Fig. 22 and Fig. 23, water pump 84 and vacuum pump 85 are both fixed on the inner wall of carrier assembly 89 through clamps. It is easy to understand that water pump 84 and vacuum pump 85 can also be disposed at other positions of carrier assembly 89.

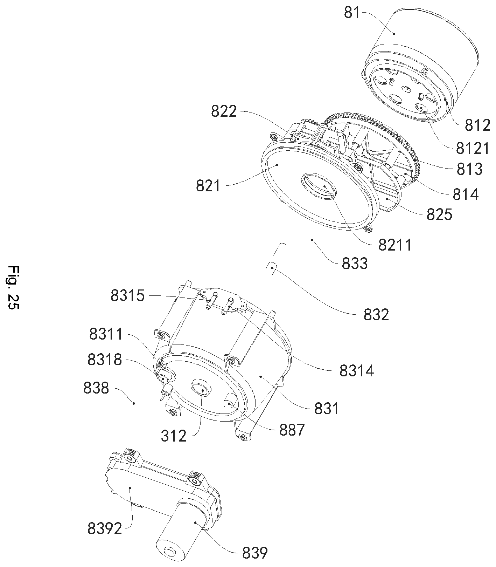

The integrated container 831 is fixed inside the carrier assembly 89 and is provided with a heating device 8311, a temperature sensor 887, a rotating shaft hole 8312, a water inlet 8314, a suction hole 8315, and a bottom outlet 8318 with an outlet valve 838. As shown in Fig. 25, the integrated container 831 is made of aluminum die-casting, and its bottom is provided with a roughly circular heating device 8311 which, if powered on, can increase the temperature inside the integrated container 831. It is easy to understand that the bottom outlet 8318 is exposed from the carrier assembly 89, and the mixture of coffee powder and water in the integrated container 831 can be discharged from the bottom outlet 8318 to the filtering device 871 described later. The outlet valve 838, an electromagnetic valve or the like of prior art, can control the opening and closing of the bottom outlet 8318.

The water pump 84, vacuum pump 85, heating device 8311, temperature sensor 887, rotating power device 39, and outlet valve 838 are electrically connected to the electronic control device 88 respectively; the electronic control device 88, a prior art, usually comprises devices such as circuit boards for implementing electronic control, screens for displaying information, and buttons or touch screens for inputting information. It is easy to understand that the electronic control device 88 can control the opening, stopping, and working states of the water pump 84, vacuum pump 85, heating device 8311, and rotating power device 39 separately, for instance, the electronic control device 88 controls the working states of rotating power device 39 such as the speed, flow rate, and running time of the water pump 84 through PMW, etc., and controls the working states of the heating device 8311, such as the added power, through voltage control. The temperature sensor 887 transmits temperature information to the electronic control device 88 which controls the heating device 8311, achieving temperature control of the integrated container 831. Usually, the electronic control device 88 is also electrically connected to an in-place sensor 888 that detects the position of the coffee pot 872, which will be mentioned later. Usually, the electronic control device 88 is connected to a power supply device 889, a battery or power supply line of the power supply device 889, etc.

The sealing structure 82 comprises a sealing and fixing cover 821 and a movable cover 822, the sealing and fixing cover 821 is provided with a bean inlet 8211 and completely covers a top opening of the integrated container 831, and the movable cover 822 is provided with a movable cover hole 8221 and a sealing portion 8222 and is movably connected to the sealing and fixing cover 821, so that the movable cover hole 8221 and sealing portion 8222 face the bean inlet 8211 respectively; in other words, when the movable cover hole 8221 is aligned with the bean inlet 8211, the sealing portion 8222 is completely offset from the bean inlet 8211, and when the sealing portion 8222 is aligned with the bean inlet 8211, the movable cover hole 8221 is completely offset from the bean inlet 8211. A part of the sealing and fixing cover 821, for instance, is embedded in the integrated container 831, and a rubber ring (not shown in the attached figure) is provided between the sealing and fixing cover 821 and the integrated container 831 to maintain the fixation and sealing between the two. The movable cover 822, for instance, is rotatably connected to the sealing and fixing cover 821 and driven by a motor, and the movable cover 822 can rotate relative to the sealing and fixing cover 821 in a horizontal plane, so that the movable cover hole 8221 and the sealing portion 8222 can face the bean inlet 8211, respectively. Of course, the movable cover 822 and the sealing and fixing cover 821 can also be connected through subsequent means.

The blade assembly 832 comprises a blade drive shaft 8321 and a blade 833 fixed on the blade drive shaft 8321, the blade 833 is disposed inside the integrated container 831, and the bottom end of the blade drive shaft 8321 extends from the rotating shaft hole 8312 and is connected to the rotating power end 8391 of the rotating power device 39. The rotating power device 39 can be an electric motor, and the motor shaft of the motor is connected to the rotating power end 8391. Of course, the rotating power device 39 can also be connected to the bottom end of the blade drive shaft 8321 through the transmission device 8392 of a gearbox. It is easy to understand that the rotating power device 39 can drive the blade drive shaft 8321 and the blade 833 to rotate.

The water source interface 8911 is connected to the water inlet 8314 through a water pump 84, and the path from the water source interface 8911 to the water inlet 8314 is a one-way path at the water source interface 8911 facing toward the water inlet 8314. In other words, the water source interface 8911 is connected to the inlet of water pump 84 through a pipeline (not shown in the attached figure), and the outlet of water pump 84 is connected to the water inlet 8314 through a pipeline (not shown in the attached figure), so that the water from the water source interface 8911 can be transported to the water inlet 8314 and enter the integrated container 831. For instance, a one-way valve or solenoid valve is installed between the water pump 84 and the water inlet 8314, which only allows water or air flow from the water pump 84 to the water inlet 8314, thereby making the path from the water source interface 8911 to the water inlet 8314 a one-way path at the water source interface 8911 facing toward the water inlet 8314. The water pump 84, for example, is a diaphragm pump, simplifying the one-way valve or solenoid valve and reducing the costs.

The vacuum pump 85 is connected to the suction hole 8315. It is easy to understand that usually the carrier assembly 89 is not completely sealed, so even if the vacuum pump 85 is set inside the carrier assembly 89, the vacuum pump 85 can extract the air inside the integrated container 831 and the sealing and fixing cover 821 to the atmosphere.

The coffee preparation method based on a vacuum coffee machine according to an embodiment of the present invention uses the above vacuum coffee machine, comprising the following steps:
Adding coffee beans: moving the movable cover 822 in relative to the sealing and fixing cover 821 so that the movable cover hole 8221 faces the bean inlet 8211, and then adding coffee beans, for instance, 31g, to the integrated container 831; moving the movable cover 822 in relative to the sealing and fixing cover (21) so that the sealing portion 8222 is facing the bean inlet 8211 and the outlet valve 838 is closed.

Vacuum grinding: starting the vacuum pump 85 to create and maintain a vacuum inside the integrated container 831, and activating the rotating power device 39 to grind coffee beans into coffee powder using the blade 833 at a grinding speed; for instance, the vacuum degree is -80kPa±10%.

Coffee brewing: stopping the vacuum pump 85 to restore the air pressure inside the integrated container 831 to atmospheric pressure, and after adding room temperature water to the integrated container 831 (equivalent to a mount after the amount of soaking water mentioned later is subtracted from the total amount of water), and starting the heating device 8311 to raise the temperature inside the integrated container 831 to the brewing temperature and maintain during the brewing time; for instance, the brewing temperature is 90-96°C.

Coffee outputting: opening the outlet valve 838, and outputting the mixture of coffee powder and water in the integrated container 831 from the outlet valve 838.

It should be noted that the vacuum coffee machine according to an embodiment of the present invention needs to be used in conjunction with the functional part 87 of the prior art. Specifically, functional part 87 comprises a filtering device 871 and a coffee pot 872, and the filtering device 871 and coffee pot 872 are sequentially disposed below the outlet valve 838 from top to bottom, and when the mixture of coffee powder and water output from the outlet valve 838 passes through the filtering device 871, larger coffee powder is filtered out by the filtering device 871, and the coffee liquid enters the coffee pot 872 through the filtering device 871 for consumption. The filtering device 871, for instance, comprises a drawer member 8711 inserted into the carrier assembly 89, a filter basket 8712 on the drawer member 8711, and a filter screen (not shown in the attached figure) inside the filter basket 8712. In the above process, the coffee beans are ground, heated, and extracted in a unique sealed space, avoiding or reducing the chances for coffee powder to come into contact with oxygen in the air during its transfer between different units, thereby minimizing the oxidation and maximizing the preservation of volatile oils, antioxidants, and enzymes in the coffee powder.

It should be noted that since the sealing and fixing cover 821 completely covers the top opening of the integrated container 831, the integrated container 831 needs to be cleaned through an automatic process, specifically, the water pump 84 is started to inject room temperature water into the integrated container 831, and the heating device 8311 is started to heat the water in the integrated container 831 to 70°C and maintain it for 3min to enhance the cleaning effect and loosen the residue (such as coffee powder attachments) inside the integrated container 831. The rotating power device 839 is activated to run blade 833 at a low speed of 200rpm for 2min to produce a cyclonic cleaning effect. The outlet valve 838 is opened to discharge the wastewater (residue mixed with water) from the bottom outlet 8318 to the wastewater container, and then the integrated container 831 can be cleaned.

The coffee preparation method based on a vacuum coffee machine according to an embodiment of the present invention, further comprising a step of soaking coffee beans between the step of injecting coffee beans and the step of vacuum grinding, specifically: the water pump 84 is started to inject room temperature water (i.e., water at room temperature, usually 25°C) into the integrated container 831 and the coffee beans are soaked for a certain period of time in the water heated to the soaking temperature (it is easy to understand that the heating device 8311 can be turned on to achieve a temperature higher than the normal water temperature), thus ensuring sufficient extraction of coffee bean flavor, for instance, the soaking temperature is from room temperature to 45°C, and the soaking time is 2-10min.

The coffee preparation method based on a vacuum coffee machine according to an embodiment of the present invention, further comprising a step of stirring between the step of soaking coffee beans and the step of vacuum grinding, specifically: the rotating power device 39 is started to operate at the stirring speed for a stirring time, ensuring uniform grinding of coffee beans to prevent clumping. For instance, the stirring speed is 50-120rpm and the stirring time is 20-30s.

The coffee preparation method based on a vacuum coffee machine according to an embodiment of the present invention, further comprising a step of final mixing between the step of brewing coffee and the step of outputting coffee, specifically: the rotating power device 39 is started to run at the mixing speed for a mixing time, ensuring that the coffee powder is thoroughly mixed with water, that the coffee flavor is fully blended, and that the coffee liquid has a smooth taste. The mixing speed is 800rpm and the mixing time is 3-10s.

The following are several specific embodiments of a coffee preparation method based on a vacuum coffee machine. It should be noted that the weight of coffee beans and the total amount of water (i.e., the amount of injected room temperature water plus the amount of replenished water) can increase or decrease accordingly, and the ratio of the two can maintain the same coffee concentration. On the premise of keeping the total amount of water constant, increasing the weight of coffee beans, for instance, based on a level of 20%, can increase the concentration of coffee.

Embodiment 1: the embodiment aims to provide a balanced and conventional coffee taste. Specifically: Inject 31g of coffee beans and 300ml of room temperature water. The soaking temperature is 45°C and the soaking time is 3min. The stirring speed is 50rpm, and the stirring time is 30s. The grinding speed is 1,600rpm, and the vacuum is -80kPa. Add water to 500ml, the brewing temperature is 94°C, and the brewing time is 2-3min. The mixing speed is 800rpm and the mixing time is 5s. The total time is 6-7min.

Embodiment 2: the embodiment aims to highlight the characteristics of light roast beans. Specifically: Inject 31g of coffee beans and 300ml of room temperature water. The soaking temperature is 40°C and the soaking time is 3min. The stirring speed is 90rpm, and the stirring time is 20s. The grinding speed is 1,800rpm, and the vacuum is -80kPa. Add water to 500ml, the brewing temperature is 96°C, and the brewing time is 1-2min. The mixing speed is 800rpm and the mixing time is 5s. The total time is 5-6min.

Embodiment 3: the embodiment aims to highlight the characteristics of moderate roast beans. Specifically: Inject 31g of coffee beans and 300ml of room temperature water. The soaking temperature is 40°C and the soaking time is 4min. The stirring speed is 100rpm, and the stirring time is 25s. The grinding speed is 1,600rpm, and the vacuum is -80kPa. Add water to 500ml, the brewing temperature is 94°C, and the brewing time is 1-2min. The mixing speed is 800rpm and the mixing time is 5s. The total time is 6-7min.

Embodiment 4: the embodiment aims to highlight the characteristics of dark roast beans. Specifically: Inject 31g of coffee beans and 300ml of room temperature water. The soaking temperature is 40°C and the soaking time is 5min. The stirring speed is 100rpm, and the stirring time is 25s. The grinding speed is 1,400rpm, and the vacuum is -80kPa. Add water to 500ml, the brewing temperature is 92°C, and the brewing time is 0.5-1 minute. The mixing speed is 800rpm and the mixing time is 5s. The total time is 6-7min.

Embodiment 5: the embodiment aims to maximize flavor extraction. Specifically: Inject 31g of coffee beans and 300ml of room temperature water. The soaking temperature is 40°C and the soaking time is 7min. The stirring speed is 110rpm, and the stirring time is 30s. The grinding speed is 1,200rpm, and the vacuum is -80kPa. Add water to 500ml, the brewing temperature is 95°C, and the brewing time is 0.5-1 minute. The mixing speed is 800rpm and the mixing time is 5s. The total time is 8-9min.

Embodiment 6: the embodiment aims to simulate the smooth taste of cold extraction. Specifically: Inject 31g of coffee beans and 300ml of room temperature water. The soaking temperature is room temperature and the soaking time is 10min. The stirring speed is 90rpm, and the stirring time is 25s. The grinding speed is 1,200rpm, and the vacuum is -80kPa. Add water to 500ml, the brewing temperature is room temperature, and the brewing time is 1-4min. The mixing speed is 800rpm and the mixing time is 5s. The total time is 12-15min.

Embodiment 7: the embodiment aims to get strong and rich coffee liquid. Specifically: Inject 31g of coffee beans and 300ml of room temperature water. The soaking temperature is 45°C and the soaking time is 4min. The stirring speed is 100rpm, and the stirring time is 25s. The grinding speed is 1,200rpm, and the vacuum is -80kPa. Add water to 500ml, the brewing temperature is 95°C, and the brewing time is 2-3min. The mixing speed is 800rpm and the mixing time is 5s. The total time is 7-8min.

Embodiment 8: the embodiment aims to fully customize the brewing process for users. Specifically: Inject 31g of coffee beans based on 6 optional levels, 20% each level, and 300ml of room temperature water. The default soaking temperature is 40°C but adjustable, and the soaking time can be selected within the range of 2-10min. The stirring speed can be selected within the range of 50-120rpm, and the stirring time can be selected within the range of 20-30s. The grinding speed can be selected within the range of 1200 to 1,800rpm, and the vacuum is -80kPa. Add water to 500ml, the brewing temperature can be selected within the range of 90 to 96°C, and the brewing time can be selected within the range of 0.5-3min. The mixing speed is 800rpm and the mixing time is 3-10s.

Embodiment 9: the embodiment aims to simulate conventional drip filtration. Specifically: Inject 31g of coffee beans and 300ml of room temperature water. The soaking temperature is 40°C and the soaking time is 4min. The stirring speed is 100rpm, and the stirring time is 20s. The grinding speed is 1,600rpm, and the vacuum is -80kPa. The brewing temperature is 95°C. The mixing speed is 800rpm and the mixing time is 5s. The brewing time is 1-2min. The total time is 6-7min.

As shown in Fig. 20, and Fig. 26 to Fig. 31, the coffee bean rationing structure of the coffee machine according to an embodiment of the present invention comprises a container assembly 81, comprising, from top to bottom in sequence and coaxial, a container member 811, a rotating disc 813, and a storage rack 814.

The bottom wall of the container member 811 is provided with a plurality of container bottom wall holes 8111 that are uniformly distributed around its axis, the rotating disc 813 is provided with a plurality of rotating disc holes 8131 that are uniformly distributed around its axis, and the storage rack 814 is provided with a storage tank 8141.

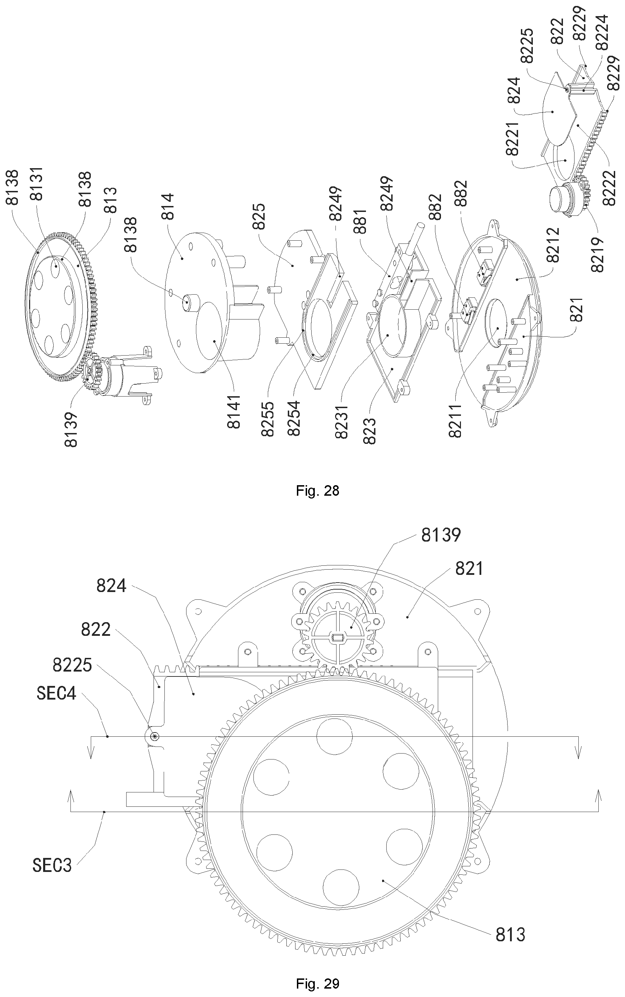

Rotating disc 813 has rotational power. For instance, the output shaft of the motor is fixedly connected to the rotating disc 813, and the motor drives the rotating disc 813 to have rotational power. For instance, as shown in Fig. 28, the container assembly 81 also comprises a rotating disc power gear 8139 with rotational power, and the rotating disc power gear 8139 is driven by a motor which is fixed on the sealing and fixing cover 821 relative to the carrier assembly 89; the rotating disc 813 is a gear and its side wall meshes with the rotating disc power gear 8139, so that the rotating disc 813 has rotational power to avoid the size limit on the rotating disc hole 8131 due to the arrangement of motor at the axis position of rotating disc 813.

The container member 811 is, directly or indirectly, rotatably connected to the rotating disc 813, for instance, the central shaft 8118 of the container member 811 is directly embedded in the rotating disc 813, so that the container member 811 is directly rotatably connected to the rotating disc 813; for instance, the container member 811 is indirectly rotatably connected to the rotating disc 813 through the rotating connection between the container base 812 and the rotating disc 813, which will be described later.

The container bottom wall holes 8111 are completely offset from the rotating disc holes 8131, and the container bottom wall holes 8111 are aligned with the rotating disc holes 8131, and it is easy to understand that the number of container bottom wall holes 8111 is equal to that of rotating disc holes 8131, for instance, there are six container bottom wall holes 8111 and six rotating disc hole 8131. When viewed from above, one container bottom wall hole 8111 is located in the area between two adjacent rotating disc holes 8131 without any overlap with either of the two rotating disc holes 8131, and the container bottom wall hole 8111 is completely offset from the rotating disc hole 8131; since the container bottom wall hole 8111 and rotating disc hole 8131 have the same number and are evenly distributed around the axis of the rotating disc 813, the other container bottom wall holes 8111 are also completely offset from the other rotating disc holes 8131. When viewed from above, if a container bottom wall hole 8111 is completely located at a rotating disc hole 8131 (including complete overlap between them), or a rotating disc hole 8131 is completely located at a container bottom wall hole 8111, the container bottom wall hole 8111 is aligned with the rotating disc hole 8131, and the other container bottom wall holes 8111 are aligned with the other rotating disc holes 8131.

The bottom surface of the rotating disc 813 is in contact with the top surface of the storage rack 814, and the rotating disc 813 has a rotating disc hole 8131 that is completely located inside the storage rack 8141 when viewed from above and, for instance, only one rotating disc hole 8131 is completely located within the storage rack 8141 when viewed from above.

Based on the working principle of embodiment 2, a large number of coffee beans are placed into the container member 811 before use, the coffee beans are stored and stacked in the container member 811, and a portion of coffee beans goes to the rotating disc hole 8131 through the container bottom wall hole 8111 until they are supported by the storage rack 814. It is easy to understand that a plurality of rotating disc holes 8131 are filled with coffee beans.

To maintain a rationed output of coffee beans, the electronic control device 88 controls the rotating disc 813 (which controls the motor driving the rotating disc power gear 8139) to rotate the set angle, so that the rotating disc holes 8131 corresponding to the set angle pass through the storage tank 8141 in sequence, and the coffee beans in the rotating disc holes 8131 fall into the storage tank 8141 in sequence. There are six rotating disc holes 8131, for instance, the central angle between two adjacent rotating disc holes 8131 is sixty degrees, the electronic control device 88 controls the rotating disc 813 to rotate sixty degrees once, causing the coffee beans in one rotating disc hole 8131 fall into the storage tank 8141; the electronic control device 88 controls the rotating disc 813 to rotate sixty degrees twice, causing the coffee beans in the rotating disc hole 8131 to fall into the storage tank 8141, and so on. The set rotation angle of rotating disc 813 can cause the corresponding number of coffee beans in the rotating disc hole 8131 to fall into the storage tank 8141 for use in the next process.

When the required number of coffee beans fall into the storage groove 141, the rotating disc 813 is still in a state where the container bottom wall holes 8111 are completely offset from the rotating disc holes 8131, and all container bottom wall holes 8111 are closed, isolating the inner cavity of the container member 811 from the outside.

It can be seen from the above that the coffee bean rationing structure of the coffee machine according to an embodiment of the present invention can not only output coffee beans in a rationing manner, but also ensure the isolation of the inner cavity of the container member 811 from the outside, reduce or prevent the oxidation of coffee beans inside the container member 811.

As a specific embodiment, the container assembly 81 also comprises a container base 812 located between the container member 811 and the rotating disc 813, the container base 812 is provided with a number of base holes 8121 equal to the number of container bottom wall holes 8111, the base holes 8121 are uniformly distributed around the axis of container base 812, and the bottom end surface of the container member 811 is in contact with and hinged to the container base 812. For instance, the bottom surface of the container member 811 is fixedly provided with a central shaft 8118 that is embedded in the container base 812, and a screw is screwed into the bottom surface of the central shaft 8118 so that the container member 811 can rotate only relative to the container base 812, but cannot be separated from the container base 812. As mentioned above, the container assembly 811 is indirectly rotatably connected to the rotating disc 813 through the container base 812, the container bottom wall holes 8111 are completely offset from the base holes 8121, and the container bottom wall holes 8111 can be aligned with the base holes 8121. After container member 811 and container base 812 are disassembled from carrier assembly 89, the container bottom wall holes 8111 are completely offset from the base holes 8121, then the container bottom wall holes 8111 are closed, so that both the container member 811 and container base 812 can be easily moved to load coffee beans into the container member 811, and the operation of loading coffee beans into the container member 811 is not limited to the carrier assembly 89.

As an embodiment, one of the bottom surface of the container member 811 and the container base 812 is provided with a rotation limit groove 8122, and the other is provided with a rotation limit protrusion 8112 inserted into the rotation limit groove 8122, the state where the rotation limit protrusion 8112 is in contact with both ends of the rotation limit groove 8122 corresponds to the state where the container bottom wall hole 8111 is completely offset from the base hole 8121, and to the state where the container bottom wall hole 8111 is directly facing the base hole 8121. For instance, the rotation limit protrusion 8112 is cylindrical, and when viewed from above, the rotation limit groove 8122 is annular in shape, and when the rotation limit protrusion 8112 is in contact with one end of the rotation limit groove 8122, the container bottom wall holes 8111 are completely offset from the base holes 8121 and, when the rotation limit protrusion 8112 is in contact with the other end of rotation limit groove 8122, the container bottom wall holes 8111 are aligned with the base holes 8121, therefore ensuring the rotation angle between the container member 811 and the container base 812, and ensuring that the container bottom wall holes 8111 are completely offset from the base holes 8121, and the container bottom wall holes 8111 are directly aligned with the base holes 8121 to improve reliability.

As an embodiment, the side wall of the container base 812 is provided with a base installation protrusion 8123 to achieve rotational connection. As shown in Fig. 20, the top of the carrier assembly 89 is provided with a container groove 892, and the side wall of container groove 892 is provided with a L-shaped base installation groove 8923. First, move the base installation protrusion 8123 downward and slide it into the vertical part of the base installation groove 8923, then rotate the container base 812 so that the base installation protrusion 8123 slides into the horizontal part of the base installation groove 8923 until it is pressed against the inner wall of base installation groove 8923 and cannot continue to rotate the container base 812, and the container member 811 and container base 812 can then be installed on the carrier assembly 89. It should be noted that after the container member 811 and container base 812 are installed on the carrier assembly 89, the container base 812 is fixed relative to the carrier assembly 89, the storage rack 814 is fixed relative to the sealing and fixing cover 821 and fixed relative to the carrier assembly 89, and the rotating disc 813 is connected to the container base 812 and storage rack 814 through a rotating connection structure 8138 to be able to rotate relative to the carrier assembly 89, and the rotating connection structure 8138 can be a cylindrical structure embedded in a cylindrical hole or a circular wall embedded in a cylindrical hole. This embodiment can conveniently install the container base 812 onto the carrier assembly 89.

As an embodiment, the rotation direction of one end of the rotation limit groove 8122 corresponding to the state where the container bottom wall hole 8111 is completely offset from the base hole 8121, and the rotation direction of one end of the rotation limit groove 8122 corresponding to the state where the container bottom wall hole 8111 is aligned with the base hole 8121, are the same as the rotation direction of the base installation protrusion 8123 to lock the container base 812. As shown in Fig. 20, first move the base installation protrusion 8123 downward and slide it into the vertical part of base installation groove 8923, then rotate the container base 812 so that the base installation protrusion 8123 slides into the horizontal part of base installation groove 8923 until it is pressed against the inner wall of base installation groove 8923 and cannot continue to rotate the container base 812. During this process, the rotation direction of the base installation protrusion 8123 is a direction in which the base installation protrusion 8123 rotates and locks the container base 812. Continuing the rotation of container part 11 in this direction can make the container bottom wall holes 8111 completely offset from the base holes 8121 and make the container bottom wall holes 8111 face the base holes 8121. After container member 811 is rotated in the opposite direction, the container bottom wall holes 8111 are aligned with the base holes 8121, and the container bottom wall holes 8111 are completely offset from the base holes 8121, and after the base installation protrusion 8123 is moved upward and slid out of the vertical part of base installation groove 8923, the container member 811 and container base 812 can be removed from the carrier assembly 89 with the container bottom wall holes 8111 in the closed state (i.e., the container bottom wall holes 8111 are completely offset from the base holes 8121), and while the container member 811 and container base 812 are being disassembled and installed, the container bottom wall holes 8111 can be closed and opened, facilitating the closing and opening of container bottom wall holes 8111.

As an embodiment, the bottom wall of the container member 811 is provided with a guide groove 8117 that is connected to the top of container bottom wall holes 8111, and the cross-sectional area (a plane cut by the horizontal plane) of the guide groove 8117 is reduced from top to bottom. More coffee beans tend to move toward the container bottom wall hole 8111 after gathering in the guide groove 8117, so that the container bottom wall hole 8111, base hole 8121, and rotating disc hole 8131 are filled with coffee beans without any empty rotating disc hole 8131, thereby ensuring the rationing accuracy of coffee beans.

As an embodiment, the edges of container bottom wall holes 8111 extend downward to form closed flanges 113 that are respectively attached to the container base 812, ensuring the sealing between container member 811 and container base 812, while ensuring that container member 811 can rotate smoothly relative to the container base 812.

As an embodiment, a container cover 19 is provided at the top of the container member 811 to completely cover the top opening of the container member 811 to ensure its sealing property.

As shown in Fig. 23 and Fig. 28, the sealing structure of the vacuum coffee machine according to an embodiment of the present invention comprises a sealing structure 82 that comprises a sealing and fixing cover 821 and a movable cover 822; the sealing and fixing cover 821 is provided with a bean inlet 8211; the movable cover 822 is provided with a movable cover hole 8221 and a sealing portion 8222, the movable cover 822 is linearly sliding connected to the sealing and fixing cover 821 and has linear power, so that the movable cover hole 8221 and the sealing portion 8222 can respectively face the bean inlet 8211. As mentioned above, the sealing and fixing cover 821 completely covers the top opening of integrated container 831. When the movable cover hole 8221 is facing the bean inlet 8211, the coffee beans in the storage tank 8141 can pass through the movable cover hole 8221 and to the integrated container 831, and when the sealing portion 8222 is facing the bean inlet 8211, the bean inlet 8211 is closed, making the internal space of the integrated container 831 sealed. In summary, the sealing structure of the vacuum coffee machine according to an embodiment of the present invention can realize the automatic opening and closing of the bean inlet 8211 of sealing and fixing cover 821, ensuring that coffee beans are processed in the closed integrated container 831.

As an embodiment, one side of the movable cover 822 is a rack, and a linear sliding power component 219 with gears, which meshes with the rack, is provided on the sealing and fixing cover 821. The linear sliding power component 219 is driven by a motor (electrically connected to the electronic control device 88) and has rotational power, and the rotation of the linear sliding power component 219 provides the movable cover 822 with linear power. The sealing and fixing cover 821 is provided with a position sensor 882 that is electrically connected to the electronic control device 88. For instance, the position sensor 882 is a micro switch, and the position sensor 882 is triggered at the position of movable cover 822 respectively when the bean inlet 8211 is opened and closed, and together with the motor of the linear sliding power component 219, the bean inlet 8211 of the sealing and fixing cover 821 can be the automatically opened and closed.

As an embodiment, the sealing structure 82 also comprises a movable cover limit rack 823 fixed on the sealing and fixing cover 821, the movable cover limit rack 823 is provided with a limit rack hole 8231, and the sealing and fixing cover 821 is provided with a linear sliding structure 8212 with a linear groove, and both sides of the movable cover 822 are respectively in contact with the inner walls of the linear sliding structure 8212, and the bottom surface of the movable cover limit rack 823 is in contact with the movable cover 822, so that the movable cover 822 and sealing and fixing cover 821 are linearly and slidably connected. The movable cover 822 is not easy to detach from the sealing and fixing cover 821, improving the reliability.

As an embodiment, both sides of the movable cover 822 are provided with movable cover protrusions 229, which are arranged along the linear power direction of the movable cover 822, reducing the friction between the movable cover 822 and the sealing and fixing cover 821 and/or the movable cover limit rack 823, and ensuring the smooth linear movement of the movable cover 822.

As an embodiment, the bottom surface of the sealing portion 8222 is provided with a sealing ring 8223 that is in contact with the sealing and fixing cover 821, and the sealing ring 8223, which is a rubber ring, is elastic; as the sealing portion 8222 is facing the bean inlet 8211, when viewed from above, the bean inlet 8211 is completely located inside the sealing ring 8223, improving the sealing between the movable cover 822 and the sealing and fixing cover 821, ensuring that the coffee beans are processed in the sealed integrated container 831.

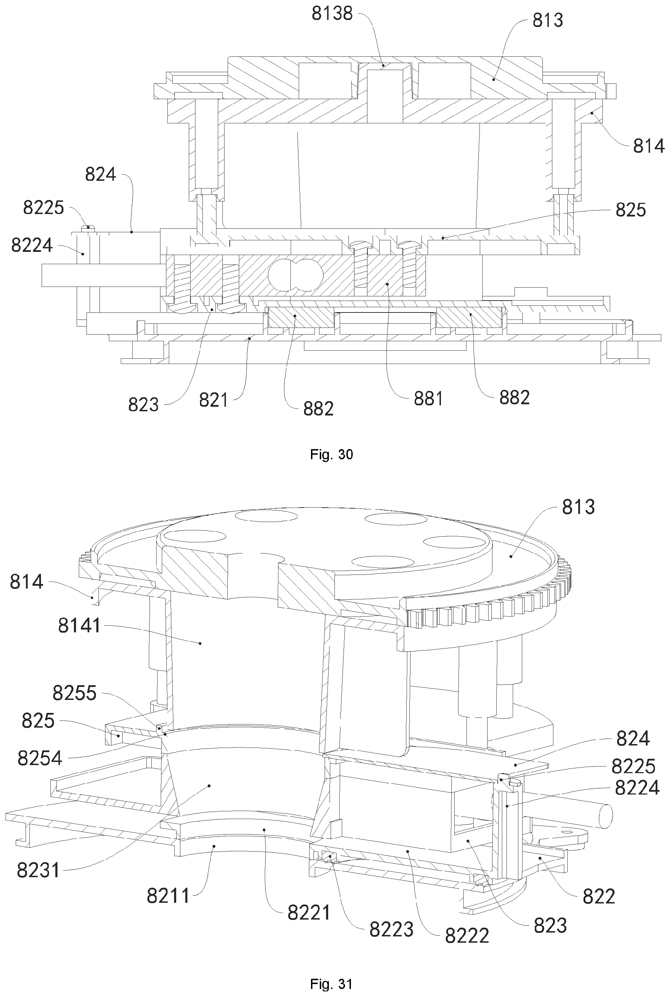

As an embodiment, the sealing structure 82 also comprises a weighing sensor 881, a weighing piece 824, and a weighing rack 825; As shown in Fig. 30, one end of the weighing sensor 881 is fixed relative to the sealing and fixing cover 821, and the other end is fixed to the weighing rack 825, for instance, one end of the weighing sensor 881 is fixed to the movable cover limit rack 823 relative to the sealing and fixing cover 821; the movable cover 822 is provided with a weighing piece moving body 8224 that is in contact with the weighing rack 825, and the top of the weighing piece moving body 8224 is provided with a weighing piece connecting protrusion 8225 that passes through the weighing piece 824. It is easy to understand that the weighing piece connecting protrusion 8225 can drive the weighing piece 824 to move with the movable cover 822, but the weighing piece 824 can move vertically along the weighing piece connecting protrusion 8225. The weighing rack 825 has a through-hole (not marked in the attached figure), and the periphery of the through-hole of weighing rack 825 is provided with a weighing piece support 8254, and when the weighing piece support 8254 supports the weighing piece 824, the through-hole of the weighing rack 825 is completely covered by the weighing piece 824; when the weighing piece 824 moves with the movable cover 822 and the through-hole of the weighing rack 825 is completely offset from the weighing piece 824, coffee beans can pass through the through-hole of weighing rack 825, the limit rack hole 8231, and the bean inlet 8211 and enter the integrated container 831. The movable cover limit rack 823 and the weighing rack 825 are both provided with a clearance groove 8249 that allow the weighing piece moving body 8224 to pass through. The coffee beans falling on the weighing piece 824 are subjected to gravity due to the weighing rack 825, allowing the weighing sensor 881 to measure the weight of the weighing rack 825, weighing piece 824, and coffee beans, and after the weight of the weighing rack 825 and weighing piece 824 and the tare are removed, the weight of the coffee beans ready to enter the bean inlet 8211 is available, which facilitates the confirmation of the rationing information on the coffee beans. It is easy to understand that for embodiments with storage rack 814 and rotating disc 813, the weight measured by weighing sensor 881 also comprises the weight of both, so the weight of both should be removed accordingly at the time of tare deduction.

As an embodiment, as shown in Fig. 31, the sealing structure 82 also comprises a storage rack 814 with a storage groove 141, the storage groove 141 is aligned with a through-hole of the weighting rack 25, the storage rack 814 is fixed on the weighing rack 825, and the side wall at the bottom end of the storage groove 141 is in contact with or close proximity to the weighing piece 824. As mentioned above, the coffee beans inside container member 811 pass through the container bottom wall hole 8111, base hole 8121, and rotating disc hole 8131 in sequence before entering the storage groove 141 for aggregation, without scattering into a larger area; it is unnecessary to set a larger area for the weighing piece 824, and a smaller area can be set to realize miniaturization. When the weighing piece 824 moves with the movable cover 822, the coffee beans in the storage groove 141 are blocked by its inner wall and will not move with the movable cover 822, which can improve the reliability.

As an embodiment, the weighing rack 825 is provided with a weighing piece locating edge 8255 that is in contact with or close proximity to the side of the weighing piece 824, ensuring that the weighing piece 824 moves linearly with the movable cover 822 to improve reliability.

The vacuum mixing structure according to an embodiment of the present invention comprises a processing structure 83 including an integrated container 831, a blade assembly 832, a sealing and fixing cover 821, and a rotating power device 39, the sealing and fixing cover 821 completely covers the top opening of the integrated container 831, the integrated container 831 is provided with a heating device 8311, a rotating shaft hole 8312, a water inlet 8314, a suction hole 8315, and a bottom outlet 8318 (the bottom outlet 8318 can be located on the bottom surface of the integrated container 831 or on the bottom of the side wall of the integrated container 831), the water inlet 8314 is used to supply water to the integrated container 831, the suction hole 8315 is used to extract air from the integrated container 831, and the bottom outlet 8318 is provided with an outlet valve 838; the blade assembly 832 comprises a blade drive shaft 8321 and a blade 833 fixed on the blade drive shaft 8321, the blade 833 is located inside the integrated container 831, and the bottom end of the blade drive shaft 8321 extends from the rotating shaft hole 8312 and is connected to the rotating power end 8391 of the rotating power device 39. As mentioned above, the coffee beans are ground, heated, and extracted in a unique sealed space, avoiding or reducing the chances for coffee powder to come into contact with oxygen in the air during its transfer between different units, thereby minimizing the oxidation and maximizing the preservation of volatile oils, antioxidants, and enzymes in the coffee powder.

It should be noted that the vacuum mixing structure according to an embodiment of the present invention is not limited to the vacuum mixing of coffee beans with water, but can also be used for the vacuum mixing of almonds, cashews, hazelnuts, walnuts, grains, pumpkin seeds, pecans, pine nuts, peanuts and soybeans with water. Of course, for the embodiments covering the almonds, cashews, hazelnuts, walnuts, grains, pumpkin seeds, pecans, pine nuts, peanuts, and soybeans with water, the blade 833 setting can be adjusted accordingly.

As an embodiment, the blade 833 comprises at least one of an upper blade 8331, a middle blade 8332, and a lower blade 8333; the upper blade 8331, middle blade 8332, and lower blade 8333 are all provided with a blade edge 8334 and a shaft connecting portion 8339, and the cross section of the blade driving shaft 321 is polygonal, elliptical, or track shaped (the shape of the remaining part between two parallel straight lines after the circle is divided by the two parallel straight lines) and is embedded in the shaft connecting portion 8339, ensuring that blade 833 rotates with blade drive shaft 8321 and facilitate the assembling of blade assembly 832.

As an embodiment, the blade assembly 832 also comprises a locating sleeve 8322, which is fitted snugly onto the blade drive shaft 8321 against the blade 833, thereby limiting the axial locating of the blade 833 and facilitating the assembling of blade assembly 832.

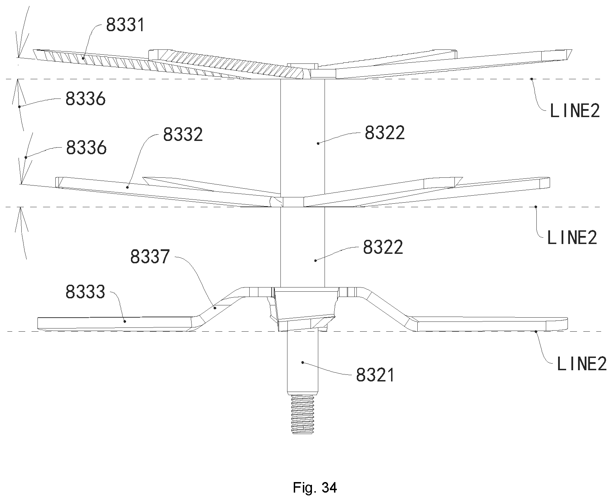

As an embodiment, as shown in Fig. 34, the upper blade 8331 and middle blade 8332 are both inclined upward to form an upward tilt angle 8336, ensuring the thorough mixing of coffee powder with water.

As an embodiment, the blade edge 8334 of upper blade 8331 is provided with cutting teeth 8335, and the width of cutting teeth 8335 gradually decreases from top to bottom. The cutting teeth 8335 having a relatively large top width crush coffee beans through quick impact and move downward along the gap between the cutting teeth 8335, ensuring that the coffee beans in the upper part of the integrated container 831 are crushed (the coffee beans are cut into relatively large particles).

As an embodiment, the shaft connecting portion 8339 of the lower blade 8333 extends downward to form a lower extension body 8337, which is fixedly connected to the lower blade 8333 so that the lower blade 8333 is approximately parallel and close to the bottom end surface of the integrated container 831. Relatively small coffee particles sink due to a high density which, when combined with the bottom surface of integrated container 831, produces a shear like effect, thereby improving the grinding effect of coffee (coffee beans are cut into relatively small particles).

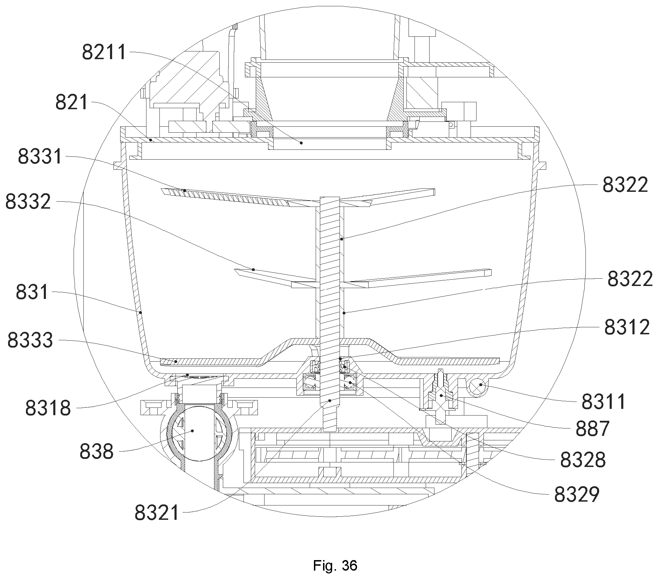

As an embodiment, as shown in Fig. 36, the interior of rotating shaft hole 8312 is sequentially provided with a shaft seal 8328 and a bearing 8329 from top to bottom, which can ensure the stability of the blade drive shaft 8321 during rotation, reduce the small gap changes between the blade drive shaft 8321 and the shaft seal 8328 during rotation, and ensure the sealing performance between the integrated container 831 and the rotating shaft hole 8312.

The terms used in the present invention, such as first and second, do not indicate any order, quantity, or importance, but are merely used for distinction.

Terms such as "a" and "one" as used in the present invention do not indicate a limitation in quantity, but rather indicate the existence of at least one object mentioned.

In the present invention, the use of terms indicating orientation or position, such as top, bottom, side, longitudinal, transverse, middle, center, outer, inner, horizontal, vertical, left, right, upper, and lower, is intended to reflect relative positions rather than absolute positions.

The terms used in the present invention, such as general, overall, approximate, and similar, are intended to indicate limiting terms that have features but allow for certain deviations. The amount of allowable deviation may vary depending on the specific background and, for instance, deviations in size and the specific backgrounds comprise but not limit to relevant standards for size tolerances.

## Claims

1. A coffee making method based on a vacuum coffee machine, wherein the vacuum coffee machine comprises a container assembly, an electric control device, and a processing assembly set inside the container assembly; the container assembly is provided with a heating device, an atmospheric solenoid valve, a release valve, a temperature sensor, and an air pressure sensor, and is connected to a vacuum pump and a water pump; the processing assembly comprises a grinding assembly and a grinding power device; the grinding assembly comprises a grinding outer ring and a grinding body located within the grinding outer ring, which is connected to the output end of the grinding power device;
It is **characterized in that** the coffee making method based on a vacuum coffee machine uses a vacuum coffee machine, and the coffee making method based on a vacuum coffee machine comprises the following steps:
injecting coffee beans into the container assembly; specifically, injecting coffee beans of the set quantity into the container assembly through the rationing assembly described later;
pre-soaking coffee beans; specifically, injecting pre-soaking water into the container assembly, and then, while the container assembly is sealed, starting the heating device to heat the water inside the container assembly to the pre-soaking water temperature during the pre-soaking water heating time, and maintaining it for the pre-soaking time to form pre-soaked coffee beans;
vacuuming the container assembly; specifically, starting the vacuum pump to vacuum the container assembly to the vacuum pressure;
wet-grinding pre-soaked coffee beans; specifically, starting the grinding power device while the container assembly is sealed to rotate the grinding body at the grinding speed for a grinding time;
brewing coffee; specifically, communicating the container assembly with the atmosphere and injecting water into the container assembly until the total water volume is reached; starting the heating device to heat the water inside the container assembly to the extraction water temperature, and maintaining it for the extraction time to form a coffee liquid;
outputting coffee; specifically, starting the release valve to output the coffee liquid the release valve.

2. The coffee making method based on a vacuum coffee machine according to claim 1, wherein the grinding time is the set quantity of coffee beans divided by 31 and multiplied by 30.

3. The coffee making method based on a vacuum coffee machine according to claim 2, wherein the processing assembly comprises a limit cover located above the grinding body, and in the step of wet-grinding pre-soaked coffee beans, when the grinding time is ≥60s, the grinding body runs in a pulse mode for the grinding time, and the pulse mode is the pulse stop time after the grinding body rotates for a pulse opening time within one pulse cycle.

4. The coffee making method based on a vacuum coffee machine according to claim 1, wherein the grinding speed is 60rpm,wherein the upper limit of the grinding time is 130s.

5. The coffee making method based on a vacuum coffee machine according to claim 1, wherein the pre-soaking water temperature is 35-55°C.

6. The coffee making method based on a vacuum coffee machine according to claim 1, wherein the vacuum pressure is -25~-50kPa, wherein the vacuum pressure is -36kPa and the extraction water temperature is 94°C.

7. The coffee making method based on a vacuum coffee machine according to claim 1, wherein the extraction water temperature is ≤99°C and ≥94°C.

8. The coffee making method based on a vacuum coffee machine according to claim 1, wherein in the step of injecting coffee beans into the container assembly, the quantity of coffee beans is set according to the concentration, which is the difference between the concentration level minus 1 multiplied by 0.2, added by 1, and multiplied by the base value of coffee beans.

9. A coffee preparation method based on a vacuum coffee machine, wherein the vacuum coffee machine comprises a container assembly, a sealing structure, a processing structure, and a carrier assembly having a water source interface; the carrier assembly is provided with an electronic control device, a water pump, and a vacuum pump; the processing structure comprises an integrated container, a blade assembly, and a rotating power device; the integrated container is fixed inside the carrier assembly and is provided with a heating device, a temperature sensor, a rotating shaft hole, a water inlet, a suction hole, and a bottom outlet with an outlet valve; the water pump, vacuum pump, heating device, temperature sensor, rotating power device, and outlet valve are electrically connected to the electronic control device respectively; the sealing structure comprises a sealing and fixing cover and a movable cover, the sealing and fixing cover is provided with a bean inlet and completely covers a top opening of the integrated container, and the movable cover is provided with a movable cover hole and a sealing portion and is movably connected to the sealing and fixing cover, so that the movable cover hole and sealing portion face the bean inlet respectively; the blade assembly comprises a blade drive shaft and a blade fixed on the blade drive shaft, the blade is disposed inside the integrated container, and the bottom end of the blade drive shaft extends from the rotating shaft hole and is connected to the rotating power end of the rotating power device; the water source interface is connected to the water inlet through a water pump, and the path from the water source interface to the water inlet is a one-way path at the water source interface facing toward the water inlet; the vacuum pump is connected to the suction hole;
It comprises the following steps:
adding coffee beans: moving the movable cover in relative to the sealing and fixing cover so that the movable cover hole faces the bean inlet, and then adding coffee beans to the integrated container; moving the movable cover in relative to the sealing and fixing cover so that the sealing portion is facing the bean inlet and the outlet valve is closed;
vacuum grinding: starting the vacuum pump to create and maintain a vacuum inside the integrated container, and activating the rotating power device to grind coffee beans into coffee powder using the blade at a grinding speed;
coffee brewing: stopping the vacuum pump to restore the air pressure inside the integrated container to atmospheric pressure, adding room temperature water to the integrated container, and starting the heating device to raise the temperature inside the integrated container to the brewing temperature and maintain during the brewing time;
coffee outputting: opening the outlet valve, and outputting the mixture of coffee powder and water in the integrated container from the outlet valve.

10. The coffee preparation method based on a vacuum coffee machine according to claim 9, further comprising a step of soaking coffee beans between the step of injecting coffee beans and the step of vacuum grinding, specifically: the water pump is started to inject room temperature water into the integrated container and the coffee beans are soaked for a certain period of time in the water heated to the soaking temperature.

11. The coffee preparation method based on a vacuum coffee machine according to claim 10, wherein the soaking temperature is from room temperature to 45°C, and the soaking time is 2-10min.

12. The coffee preparation method based on a vacuum coffee machine according to claim 10, further comprising a step of stirring between the step of soaking coffee beans and the step of vacuum grinding, specifically: the rotating power device is started to operate at the stirring speed for a stirring time.

13. The coffee preparation method based on a vacuum coffee machine according to claim 12, wherein the stirring speed is 50 to 120rpm and the stirring time is 20-30s.

14. The coffee preparation method based on a vacuum coffee machine according to claim 9, further comprising a step of final mixing between the step of brewing coffee and the step of outputting coffee, specifically: the rotating power device is started to run at the mixing speed for a mixing time.

15. The coffee preparation method based on a vacuum coffee machine according to claim 14, wherein the mixing speed is 800rpm and the mixing time is 3-10s.
